# EUROPEAN PATENT APPLICATION

(11) **EP 4 390 599 A1**
(43) Date of publication of application: **26.06.2024**
(21) Application number: 22857581.7
(22) Date of filing: 01.08.2022
(51) Int. Cl.: G05D 1/02, G10L 15/22, A47L 11/24

(54) **SELF-MOVING ROBOT CONTROL METHOD AND APPARATUS, DEVICE, AND READABLE STORAGE MEDIUM**

(30) Priority: 17.08.2021 CN 202110940990; 20.08.2021 CN 202110959732
(71) Applicant: Ecovacs Robotics Co., Ltd., Suzhou, Jiangsu 215168 (CN)
(72) Inventor: DING, Minquan, Suzhou, Jiangsu 215168 (CN); RAO, Zhu, Suzhou, Jiangsu 215168 (CN); GAO, Chao, Suzhou, Jiangsu 215168 (CN); YANG, Xiaolu, Suzhou, Jiangsu 215168 (CN); CHEN, Maoyong, Suzhou, Jiangsu 215168 (CN); LIU, Yang, Suzhou, Jiangsu 215168 (CN); LIN, Xingbao, Suzhou, Jiangsu 215168 (CN); YUE, Pengfei, Suzhou, Jiangsu 215168 (CN); YU, Haotian, Suzhou, Jiangsu 215168 (CN); LI, Daliang, Suzhou, Jiangsu 215168 (CN)
(74) Representative: Herrero & Asociados, S.L.
(86) International application number: PCT/CN2022/109522
(87) International publication number: WO 2023/020269

(57) **Abstract**

An autonomous mobile robot control method and apparatus, a device and a readable storage medium. An autonomous mobile robot determines a sound source direction according to a voice signal from a user, and determines moving objects around the autonomous mobile robot itself. The autonomous mobile robot determines, from the moving objects, a target object located in the sound source direction, determines a working area according to the target object, and moves to the working area, and executes a task. By adopting this solution, the moving objects have accurate spatial locations because the autonomous mobile robot determines the target object from the moving objects. Therefore, the autonomous mobile robot can accurately determine the target object from a plurality of moving objects according to the sound source direction and accurately reach the working area without the help of a client, and the process is simple and flexible. Moreover, this solution is applicable to all laser-based autonomous mobile robots, and is low in cost, has a simple algorithm and requires lower computing power.

## Description

### TECHNICAL FIELD

The present disclosure relates to the field of artificial intelligence technology, and more particularly, to an autonomous mobile robot control method and apparatus, a device and a readable storage medium.

### BACKGROUND

With the development of artificial intelligence technologies, various robots are increasingly entering people's lives, such as logistics robots, robot vacuum cleaners, robot mowers, and welcome robots, etc.

Voice control is a common robot control mode. When using the voice control, the robots prestore environmental maps, and identify, in the environmental maps, various working areas such as Xiaoming's room and living room. After users give voice commands indicating the working areas, the robots determine the working areas according to the voice commands and work within the working areas. For example, the users can control the robot vacuum cleaners to clean certain a room or clean around a piece of furniture by means of voice. For another example, the users control the robot mower to mow in target areas by means of voice.

The above voice control method requires to prestore the environmental maps. When the users temporarily designate a working area, they need to mark the working area in the environmental maps by means of APP, which is cumbersome in process and poor in flexibility.

### SUMMARY

Embodiments of the present disclosure provide an autonomous mobile robot control method and apparatus, a device and a readable storage medium. An autonomous mobile robot determines a working area by following a user, which is simple in process, high in flexibility, and easy for implementation.

In a first aspect, the embodiments of the present disclosure provide an autonomous mobile robot control method, which includes:
determining a sound source direction according to a voice signal from a user;
determining moving objects around the autonomous mobile robot;
determining, from the moving objects, a target object located in the sound source direction;
determining a working area according to the target object; and
moving to the working area, and executing a task within the working area.

In a second aspect, the embodiments of the present disclosure provide an autonomous mobile robot control apparatus, including:
a first determining module configured to determine a sound source direction according to a voice signal from a user;
a second determining module configured to determine moving objects around the autonomous mobile robot;
a third determining module configured to determine, from the moving objects, a target object located in the sound source direction;
a processing module configured to determine a working area according to the target object; and
an execution module configured to move to the working area and execute a task within the working area.

In a third aspect, the embodiments of the present disclosure provide an autonomous mobile robot, including a processor, a memory, and a computer program stored on the memory and capable of running on the processor. When the processor executes the computer program, the autonomous mobile robot is caused to perform the method described in the first aspect or various possible implementation manners of the first aspect.

In a fourth aspect, the embodiments of the present disclosure provide a computer-readable storage medium, in which computer instructions are stored. The method described in the first aspect or various possible implementation manners of the first aspect is implemented when the computer instructions are executed by the processor.

In a fifth aspect, the embodiments of the present disclosure provide a computer program product including a computer program. The method described in the first aspect or various possible implementation manners of the first aspect is implemented when the computer program is executed by the processor.

In the autonomous mobile robot control method and apparatus, the device and the readable storage medium provided in the embodiments of the present disclosure, the autonomous mobile robot determines a sound source direction according to a voice signal from a user, and determines moving objects around the autonomous mobile robot itself. Next, the autonomous mobile robot determines, from the moving objects, a target object located in the sound source direction, determines a working area according to the target object, and moves to the working area, and executes a task. By adopting this solution, the moving objects have accurate spatial locations because the autonomous mobile robot determines the target object from the moving objects. Therefore, the autonomous mobile robot can accurately determine the target object from a plurality of moving objects according to the sound source direction and accurately reach the working area without the help of a client, and the process is simple and flexible. Moreover, this solution is applicable to all laser-based autonomous mobile robots, and is low in cost, has a simple algorithm and requires lower computing power.

### BRIEF DESCRIPTION OF THE DRAWINGS

To describe the technical solutions of the embodiments of the present disclosure more clearly, the accompanying drawings required in the description of the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1A is a schematic diagram of implementation environment of an autonomous mobile robot control method provided in an embodiment of the present disclosure;
FIG. 1B is a schematic structural diagram of a robot vacuum cleaner provided in an embodiment of the present disclosure;
FIG. 1C is a schematic structural diagram of a sound signal collection apparatus of an autonomous mobile robot;
FIG. 1D is another schematic structural diagram of the robot vacuum cleaner provided in an embodiment of the present disclosure;
FIG. 2A is a voice control flowchart of an autonomous mobile robot provided in an embodiment of the present disclosure;
FIG. 2B is another voice control flowchart of the autonomous mobile robot provided in an embodiment of the present disclosure;
FIG. 2C is still another voice control flowchart of the autonomous mobile robot provided in an embodiment of the present disclosure;
FIG. 3 is a flowchart of the autonomous mobile robot control method provided in an embodiment of the present disclosure;
FIG. 4 is another flowchart of the autonomous mobile robot control method provided in an embodiment of the present disclosure;
FIG. 5 is a flowchart for determining a target object;
FIG. 6 shows an LAM map;
FIG. 7 shows a DTOF scatter plot;
FIG. 8 is a follow flowchart based on an AI camera in the autonomous mobile robot control method provided in an embodiment of the present disclosure;
FIG. 9 is a flowchart of the autonomous mobile robot maintaining a follow state;
FIG. 10 is a schematic structural diagram of the autonomous mobile robot;
FIG. 11 is a schematic structural diagram of an autonomous mobile robot control apparatus provided in an embodiment of the present disclosure;
FIG. 12 is a flowchart of a voice control method for the autonomous mobile device provided in an embodiment of the present disclosure;
FIG. 13 is a schematic diagram of a voice recognition process in an embodiment of the present disclosure;
FIG. 14 is a schematic diagram of carpet areas;
FIG. 15 is a schematic diagram of a furniture recognition process;
FIG. 16 is a schematic diagram of a gate recognition process;
FIG. 17 is a schematic diagram of synchronization process between the autonomous mobile device and a voice recognition server;
FIG. 18A is a schematic diagram of determining a location of a sound source relative to a center of a microphone array;
FIG. 18B is a schematic diagram of determining the microphone array and a body of the autonomous mobile device;
FIG. 18C is a schematic diagram of processes of training a voice recognition model and recognizing voice;
FIG. 19 is a flowchart of voice control logic of the autonomous mobile device provided in an embodiment of the present disclosure;
FIG. 20 is another flowchart of the voice control method for the autonomous mobile device provided in an embodiment of the present disclosure;
FIG. 21 is still another flowchart of the voice control method for the autonomous mobile device provided in an embodiment of the present disclosure;
FIG. 22 is still another flowchart of the voice control method for the autonomous mobile device provided in an embodiment of the present disclosure; and
FIG. 23 is a schematic structural diagram of an autonomous mobile robot provided in an embodiment of the present disclosure.

### DETAILED DESCRIPTION

To make the objectives, technical solutions and advantages of the present disclosure clearer, the embodiments of the present disclosure will be further described in detail below with reference to the accompanying drawings.

With the progress of science and technology, robots are increasingly entering people's lives, playing an important role in their lives. At present, the robots can reach designated working areas to work according to a voice command from a user. Taking a robot vacuum cleaner as an example, the robot vacuum cleaner preconstructs and stores an environmental map. When the user wants to clean a certain area, the user gives a voice command including the area to the robot vacuum cleaner, such as "Clean Xiaoming's room."

Additionally, sometimes the user may temporarily designate a working area. For example, when the user expects the robot vacuum cleaner to clean nearby the user's location, that is, the robot vacuum cleaner cleans a place where the user is. This function is commonly known as the "Clean wherever it is" function. The user's location is random each time. When the user marks the working area in the environmental map by means of APP each time, it is cumbersome in process and poor in flexibility.

On this basis, the embodiments of the present disclosure provide an autonomous mobile robot control method and apparatus, a device and a readable storage medium. An autonomous mobile robot determines the working area by following the user, which is simple in process, high in flexibility, and easy for implementation.

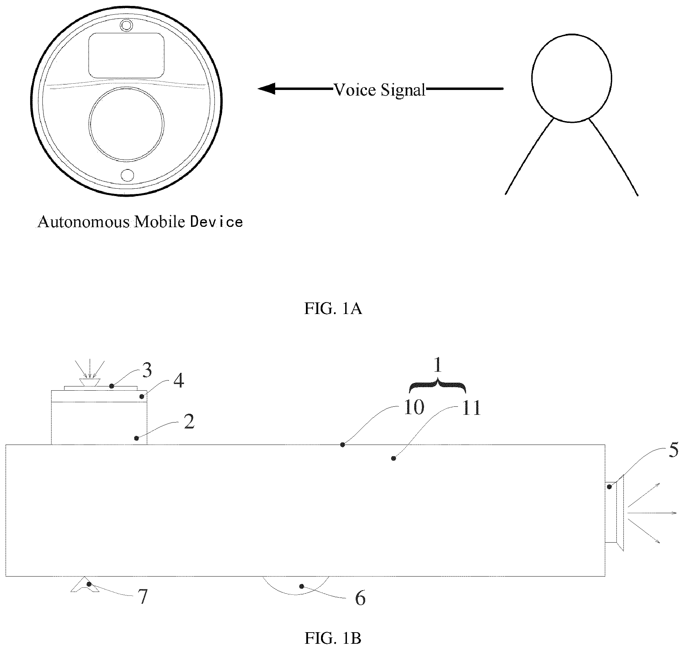

FIG. 1A is a schematic diagram of implementation environment of the autonomous mobile robot control method provided in the embodiments of the present disclosure. Referring to FIG. 1A, the implementation environment includes an autonomous mobile robot, such as a robot vacuum cleaner, an autonomous mobile air purification robot, an automatic mower, a window-cleaning robot, a solar panel cleaning robot, a housekeeper robot, an unmanned aerial vehicle, an automated guided vehicle (AGV), a security robot, a welcome robot, a caregiver robot, etc.

A sound signal collection apparatus such as a microphone is arranged on the autonomous mobile robot, to collect a voice signal from the user. After the voice signal is collected, the autonomous mobile robot recognizes the voice signal to obtain a voice command and executes a task indicated by the voice command. In practice, the autonomous mobile robot itself may recognize the voice signal. Alternatively, the autonomous mobile robot establishes a network connection with a voice recognition server (not shown in the figure). After the voice signal is collected, the autonomous mobile robot sends the voice signal to the voice recognition server, such that the voice recognition server recognizes the voice signal and sends the recognized voice command to the autonomous mobile robot.

Below, the structure of the autonomous mobile robot is described in detail below by taking an example where the autonomous mobile robot is the robot vacuum cleaner.

FIG. 1B is a schematic structural diagram of the robot vacuum cleaner provided in an embodiment of the present disclosure. The robot vacuum cleaner is referred to as a robot, referring to FIG. 1B, where "→" represents a direction of propagation of the voice signal. The robot includes a robot shell 1, a driving element, a protruding structure 2, and a voice signal collection apparatus 3. The driving element is arranged inside the robot shell 1, and is configured to drive the robot shell 1 to move. The protruding structure 2 is arranged on an upper surface 10 of the robot shell 1, and the voice signal collection apparatus 3 is arranged on the protruding structure 2.

Referring to FIG. 1B again, the robot shell 1 includes a top plate, an annular side plate, and a bottom plate. The top plate, the annular side plate, and the bottom plate are enclosed and assembled together to form a containment chamber, which is internally provided with a control unit and the driving element. In addition, the robot also includes functional elements such as a drive wheel 6, a side brush 7, a rolling brush or a fan arranged on the robot shell 1. The drive wheel 6 is configured to drive the robot to move under the action of the driving element. The side brush 7 and the rolling brush clean a working surface after receiving a signal from the control unit. The fan is configured to form a negative pressure chamber inside a dust box to suck dust, debris, etc. on the working surface into the dust box to remove the dust. It is to be noted that structures and working principles of these functional elements mentioned above are basically the same as those of existing robot vacuum cleaners, which may be fully implemented by those skilled in the art and thus are not described in detail herein.

The protruding structure 2 is arranged on the upper surface 10 of the top plate of the robot shell 1. In some embodiments, the protruding structure 2 and the top plate are integrally processed and formed. In some other embodiments, the protruding structure 2 and the top plate are separately processed and formed, and then the protruding structure 2 is fixedly connected to the upper surface 10 of the top plate by means of bonding, threaded connection, etc. The sound signal collection apparatus 3 is arranged on the protruding structure 2.

In general, noises from the robot itself are produced by functional components such as the driving element, the side brush 7, the rolling brush and/or the fan, and these components are located in the containment chamber or at a bottom thereof. In the present disclosure, the sound signal collection apparatus is arranged on the protruding structure 2 on the upper surface 10 of the robot shell 1 to keep the sound signal collection apparatus 3 away from a noise source of the robot, to reduce interferences of the noises from the robot itself on the sound signal collection apparatus 3, such that the robot can more accurately collect a user voice control command. The user voice control command includes starting cleaning floor, playing music, stopping cleaning the floor, and recharging batteries. Those skilled in the art may set corresponding functions according to actual needs of the robot.

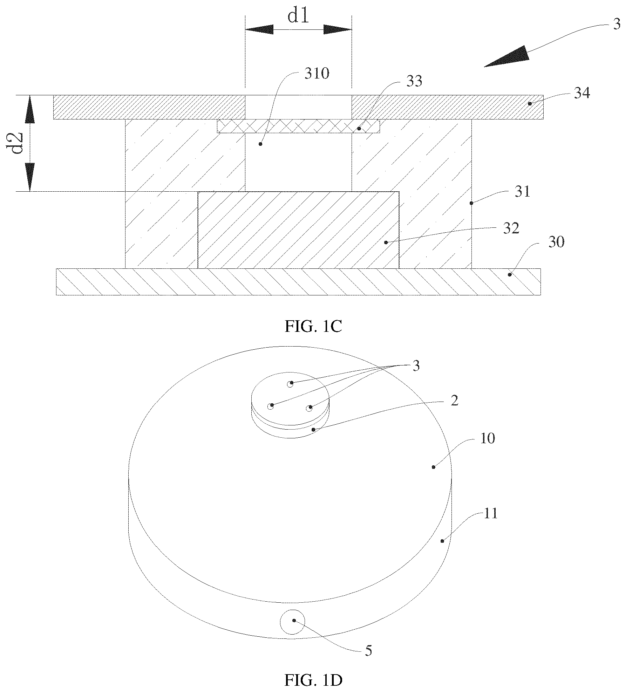

FIG. 1C is a schematic structural diagram of the sound signal collection apparatus of the autonomous mobile robot. Referring to FIG. 1C, the sound signal collection apparatus 3 includes a microphone (MIC). In detail, in some embodiments, the sound signal collection apparatus 3 includes a PCB board 30 (printed circuit board), a shock-absorbing cover shell 31, and a microphone chip 32, where the shock-absorbing cover shell 31 is arranged on the PCB board 30, and encloses together with the PCB board 30 to form an external package of the sound signal collection apparatus 3 with a containment chamber. The microphone chip 32 is arranged in the containment chamber, and a sound pick-up hole 310 communicating outside to the containment chamber is arranged in a central area at a top of the shock-absorbing cover shell 31. The PCB board 30 is in communication connection with the microphone chip 32 and the control unit of the robot. The microphone chip 32 collects an external sound signal from the sound pick-up hole 310 and then transmits the external sound signal to the control unit through the PCB board 30. The control unit controls the robot to execute the user voice control command included in the sound signal.

It is to be noted that in one aspect the shock-absorbing cover shell 31 of the sound signal collection apparatus 3 can reduce adverse impacts of vibrations produced during operation of the robot on the sound signal collection apparatus 3, and in another aspect, the shock-absorbing cover shell 31 can absorb the noise from the robot itself. The sound pick-up hole 310 is located in the central area at the top of the shock-absorbing cover shell 31, and it only collects the sound signals (generally the voice control commands issued by the user) from the top. Particularly for the robot vacuum cleaner, it typically works on the floor, when the user emits the voice control command from high, the sound pick-up hole 310 located in the central area at the top of the shock-absorbing cover shell 31 can easily collect the sound signal controlled by the user's voice, while the noise produced by the robot itself can be blocked by the shock-absorbing cover shell 31 surrounding the sound pick-up hole 310, which can reduce interference caused by the noise to signal collection of the sound signal collection apparatus 3. In some other embodiments, the shock-absorbing cover shell 31 includes shock-absorbing foam, which not only can block noises produced by the robot itself from entering the sound pick-up hole 310, but also can absorb some of the noise.

With continued reference to FIG. 1C, the sound signal collection apparatus 3 also includes a waterproof and dustproof film 33. The waterproof and dustproof film 33 is arranged on the shock-absorbing cover shell 31 and covers the sound pick-up hole 310 to prevent water or dust from falling onto the microphone chip 32 through the sound pick-up hole 310, thereby avoiding adversely affecting effects of the microphone chip 32 in collecting the sound signals.

With continued reference to FIG. 1C, in this embodiment, the sound signal collection apparatus 3 also includes an upper cover 34, which compresses the shock-absorbing cover shell 31 onto the PCB board and is fixedly connected to the protruding structure 2 or a distance sensor 3 through fastenings such as screws (not shown in the figure), thereby achieving a fixed connection relationship between the sound signal collection apparatus 3 and the robot shell 1, to prevent the sound signal collection apparatus 3 from falling off the robot shell 1 during the robot's movement. In addition, a sound pick-up hole is also provided on the central area at the top of the upper cover 34 and a corresponding location of the sound pick-up hole of the shock-absorbing cover shell 31.

Further, to enhance capability of the sound signal collection apparatus 3 in collecting the sound signal, it is required to ensure that a propagation path of the sound signal should be as short and wide as possible. In some embodiments, the above objective is achieved by limiting an aperture-to-depth ration of the sound pick-up hole 310. Specifically, the aperture (dl)-to-depth (d2) ratio of the sound pick-up hole 310 is greater than 1 as much as possible. In a more specific embodiment, the aperture (d1)-to-depth (d2) ratio of the sound pick-up hole 310 is greater than 2:1.

To enable the robot to better collect the sound signal controlled by the user's voice, in some embodiments, the robot includes at least three sound signal collection apparatuses 3, which are annularly and uniformly distributed. The at least three sound signal collection apparatuses 3 annularly and uniformly distributed can evenly collect the sound signals transmitted from various angles, to ensure accuracy and continuity of the collected user voice control signals.

FIG. 1D is another schematic structural diagram of the robot vacuum cleaner provided in the embodiments of the present disclosure. Referring to FIG. 1D, the robot includes three sound signal collection apparatuses 3, which are annularly and uniformly distributed. That is, the three sound signal collection apparatuses 3 are located on one circle, a distance from each sound signal collection apparatus 3 to a center of the circle is a radius of the circle. A central angle between adjacent two sound signal collection apparatuses 3 is 120 degrees. Moreover, to optimize sound signal collection capability of the at least three sound signal collection apparatuses 3, the at least three sound signal collection apparatuses 3 are annularly and uniformly distributed on a circle whose diameter ranges from 60mm to 100mm.

In some other embodiments, the robot includes three sound signal collection apparatuses 3, which are distributed on a triangle, and one of the three sound signal collection apparatuses 3 is located in front of the upper surface 10 of the robot shell 1 with respect to the other two sound signal collection apparatuses 3. The three sound signal collection apparatuses 3 may be annularly distributed. That is, the three sound signal collection apparatuses 3 are located on an excircle of the triangle and the central angle between adjacent two sound signal collection apparatus 3 is 120 degrees.

Of course, in some other embodiments, the three sound signal collection apparatuses 3 do not need to be annularly and uniformly distributed as long as one of them are arranged in front while the other two of them are arranged at rear. Advantages of this arrangement mode are as below. When the robot vacuum cleaner moves forward, the voice control command issued by the user is delayed in transmission in media such as air. The front sound signal collection apparatus 3 on the upper surface 10 of the robot shell 1 may only collect a small quantity of sound signals, and most of the sound signals need to be collected by the sound signal collection apparatuses 3 located at the rear. Arranging more sound signal collection apparatuses 3 at the rear can better collect the sound signals and ensure accuracy of the collected sound signals.

Further, to achieve the best effects of the sound signal collection apparatus 3 in collecting the sound signals, selection standards for the sound signal collection apparatus 3 are also provided in some embodiments. Specifically, an omnidirectional digital microphone is selected, which has a signal-to-noise ratio (SNR) greater than 64dB (A), sensitivity guaranteed at -26+3dBFS, acoustic overload point (AOP) guaranteed at 120Db SPL, total harmonic distortion (THD) 94dB spl@1kHz recommended to be below 0.5%.

Further, in some embodiments, the robot also includes a distance sensor 4, which is located on the robot shell 1 and is configured to measure a distance between the robot and an obstacle in front of a movement direction of the robot, such that when the distance reaches a set threshold, the robot may stop moving or change its motion path to prevent collision between the robot and the obstacle. In some other embodiments, the distance sensor 4 is rotatably arranged on the robot shell 1, and can rotate 360 degrees with respect to the robot shell 1 to detect layout of furniture, walls, etc. within workspace, then depict a map of the workspace, and operate according to the depicted map to improve operating efficiency.

The distance sensor 4 includes Direct Time-of-Flight (DTOF) and Laser Direct Structuring (LDS). In some embodiments, the distance sensor 4 is arranged on the protruding structure 2 mentioned above, and the sound signal collection apparatus 3 is arranged on the distance sensor 4. As can be seen, the distance sensor 4 and the sound signal collection apparatus 3 can utilize protruding structure 2, and there is no need to separately provide protrusions, which can simplify the structure of the robot as much as possible and reduce its manufacturing costs.

In some other embodiments, the protruding structure 2 includes the distance sensor 4. That is, the distance sensor 4 is directly arranged on the upper surface of the robot shell 1 to form one protruding structure 2, while the sound signal collection apparatus 3 is arranged on the distance sensor 4. That is, the sound signal collection apparatus 3 is arranged on the protruding structure 2 formed by the distance sensor 4. The distance sensor 4 is directly arranged on the upper surface of the robot shell 1 to form the protruding structure 2, while the sound signal collection apparatus 3 utilizes its own characteristics of the distance sensor 4 and is arranged on the robot shell 1 in a protruding way, without the need for additional protruding structures. Thus, the overall structure is simpler and the costs are lower.

In another aspect, the distance sensor 4 is located on the upper surface 10 of the robot shell 1, which can effectively avoid other structures of the robot itself and thus can accurately sense the location of the obstacle. Meanwhile, the sound signal collection apparatus 3 may stay as far away as possible from noisy components such as the robot's drive motor, the rolling brush, the side brush 7, and the fan, which can reduce the interference caused by the robot's noise to the sound signals.

In some other embodiments, the robot also includes a sound signal playback apparatus 5, which may be a loudspeaker (horn). The sound signal playback apparatus 5 is arranged on the robot shell 1, and the sound signal playback apparatus 5 is in communication connection with the control unit of the robot, where the control unit has a playback mode of the robot, such as playing music, etc. When the user controls the robot to enter the playback mode through a remote controller or APP, the music stored in the control unit is played back through the sound signal playback apparatus 5.

To prevent the sound signal played back by the sound signal playback apparatus 5 from interfering with the sound signal collection apparatus 3 in collecting the sound signal controlled by the user's voice, in some embodiments, the sound pick-up hole 310 of the sound signal collection apparatus 3 and a playback hole of the sound signal playback apparatus 5 face toward different directions. More specifically, the sound pick-up hole 310 of the sound signal collection apparatus 3 faces perpendicularly toward the upper surface 10 of the robot shell 1, while the playback hole of the sound signal playback apparatus 5 faces perpendicularly towards an external facade 11 of the robot shell 1. That is, an orientation of the sound pick-up hole 310 of the sound signal collection apparatus 3 and an orientation of the playback hole of the sound signal playback apparatus 5 are set at an angle of 90 degrees.

It is to be noted that in general, the upper surface 10 and the external facade 11 of the robot shell 1 are perpendicular to each other. Of course, when the sound pick-up hole 310 of the sound signal collection apparatus 3 and the playback hole of the sound signal playback apparatus 5 face toward different directions, the upper surface 10 and the external facade 11 of the robot shell 1 are set at other angles.

Further, in some embodiments, the sound signal playback apparatus 5 is located in the front of the robot shell 1, while the sound signal collection apparatus 3 is located at the rear of the robot shell 1. Further, in some other embodiments, the sound signal playback apparatus 5 is located at the rear of the robot shell 1, while the sound signal collection apparatus 3 is located at the rear of the robot shell 1. A partition criterion for the front and the rear of the robot shell 1 is based on the shape of the robot shell 1, which is divided into two parts, where an area located on a front side of the robot shell 1 is the front, and an area located on a rear side of the robot shell 1 is the rear. For example, taking the embodiment shown in FIG. 1C as an example, the circular robot shell 1 is partitioned into a front semicircle area and a rear semicircle area along front and rear directions, where the front semicircle area is defined as the front, and the rear semicircle area is defined as the rear.

It is to be understood that one of the sound signal collection apparatus 3 and the sound signal playback apparatus 5 is located in the front of the robot shell 1, and the other one is located at the rear of the robot shell 1, to maintain a sufficient distance between the sound signal collection apparatus 3 and the sound signal playback apparatus 5, thereby further reducing the interference caused by the sound signal played back by the robot itself to the sound signal collection apparatus 3. Thus, the robot can more accurately collect the user's voice control command and execute the command accurately, such that a better usage experience can be provided to the user.

Still further, to reduce the interference caused by the sound signal played back by the robot itself to the sound signal collection apparatus 3, in some embodiments, the robot also includes a sound signal re-collection apparatus, which is in communication connection with the robot's control unit and the sound signal playback apparatus 5. The sound signal re-collection apparatus is configured to re-collect the sound signal from the sound signal playback apparatus 5. The control unit receives the sound signal re-collected by the sound signal re-collection apparatus, and filters out the re-collected sound signal from the sound signals collected by the sound signal collection apparatus 3, and then transmits a command included in the filtered sound signal to an executing element, to control the executing element to execute the command.

In some embodiments, the sound signal re-collection apparatus includes a filter re-collection circuit, which is electrically connected to the control unit of the robot through wires and is electrically connected to the sound signal playback apparatus through wires.

In addition to the sound signal re-collection apparatus, in some embodiments, the robot also includes a sound signal denoising apparatus, which is in communication connection with the sound signal collection apparatus 3 and the control unit. The sound signal denoising apparatus is configured to denoise the sound signal collected by the sound signal collection apparatus 3 to eliminate noises or invalid sound signals of the collected sound signal.

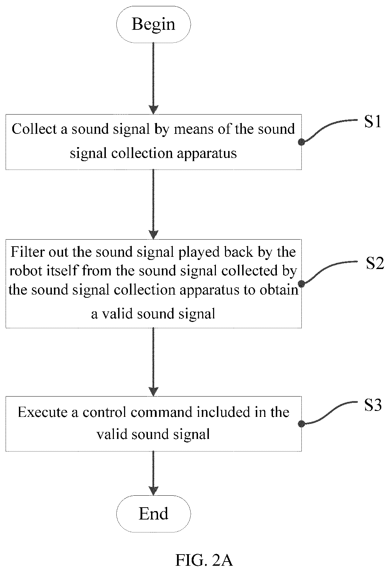

In addition to the above-mentioned robot, the present disclosure also provides a control method applicable to the robot to eliminate the invalid sound signals collected by the sound signal collection apparatus 3, particularly to eliminate the interference caused by the sound signal from the robot itself to the signal collection of the sound signal collection apparatus 3. For example, reference is made to FIG. 2A.

FIG. 2A is a voice control flowchart of the autonomous mobile robot provided in an embodiment of the present disclosure. This embodiment includes following steps.

Step S 1: collecting a sound signal by means of the sound signal collection apparatus 3.

The sound signal collected by the sound signal collection apparatus 3 mainly includes a voice control command of the user to the robot. For example, the robot uses the sound signal collection apparatus to collect the sound signal included in the user's voice control. However, in practice, the functional elements of the robot such as the drive motor, the side brush 7, the rolling brush and/or the fan can also produce sound signals during operating processes, or the robot itself also has capability of producing the sound signals. For example, the robot can play music or read books during the operating process or in a shutdown state. Because the main function of the sound signal collection apparatus 3 is to collect user voice control signals, these sound signals produced by the robot itself are collectively referred to as "invalid sound signals" herein. On this basis, to eliminate the interference caused by these invalid sound signals to the signal collection of the sound signal collection apparatus 3, the control method for the robot of the present disclosure also includes following step.

Step S2: filtering out the sound signal played back by the robot itself from the sound signals collected by the sound signal collection apparatus 3 to obtain the valid sound signals.

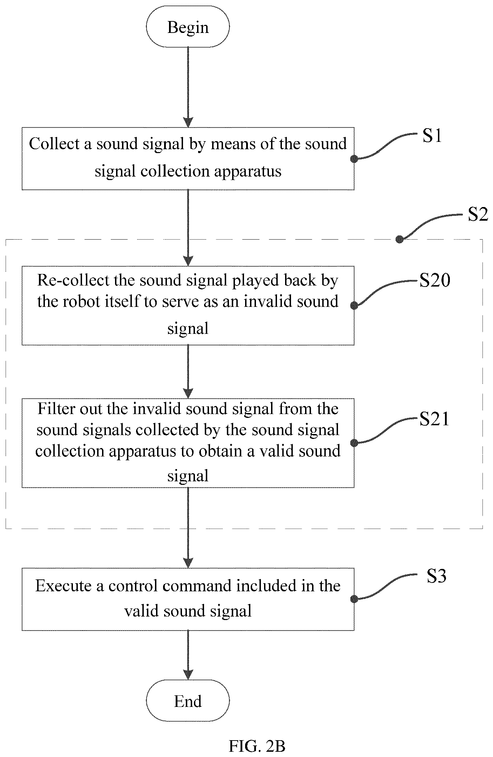

FIG. 2B is another voice control flowchart of the autonomous mobile robot provided in an embodiment of the present disclosure. Referring to FIG. 2B, in some embodiments, a method of implementing Step S2 in this control method includes following steps:
Step S20: re-collecting the sound signal played back by the robot itself to serve as an invalid sound signal; and
Step S21: filtering out the invalid sound signal from the sound signals collected by the sound signal collection apparatus 3 to obtain a valid sound signal.

In detail, a sound signal playback apparatus 5 is arranged in the robot, which may be a loudspeaker (horn). The sound signal playback apparatus 5 is arranged on the robot shell 1, and the sound signal playback apparatus 5 is in communication connection with the control unit of the robot, where the control unit has the robot's operating mode, such as playing music, etc. When the user controls the robot to enter this control mode through the remote controller or APP, the music stored in the control unit is played back through the sound signal playback apparatus 5.

The robot also includes a sound signal re-collection apparatus, which is in communication connection with the robot's control unit and the sound signal playback apparatus 5. The sound signal re-collection apparatus is configured to re-collect the sound signal from the sound signal playback apparatus 5. The control unit receives the sound signal re-collected by the sound signal re-collection apparatus, and filters out the re-collected sound signal from the sound signals collected by the sound signal collection apparatus 3, and then transmits a command included in the filtered sound signal to an executing element, to control the executing element to execute the command.

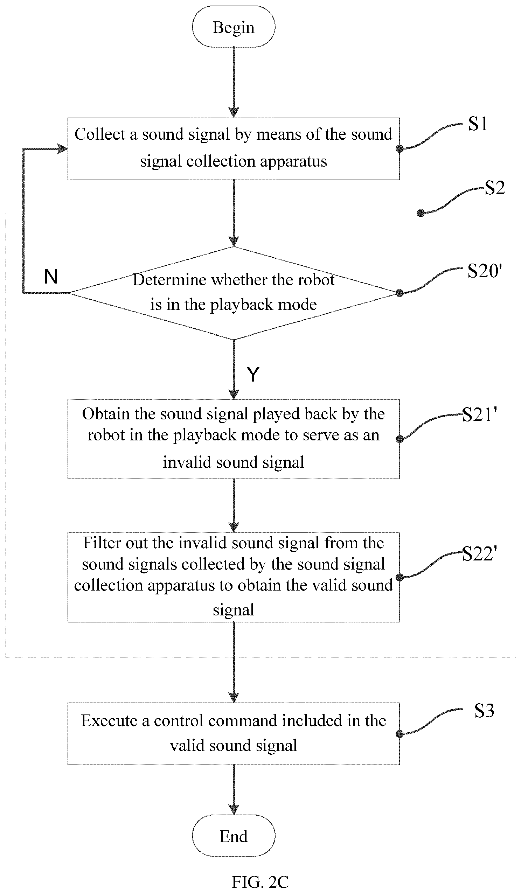

FIG. 2C is still another voice control flowchart of the autonomous mobile robot provided in an embodiment of the present disclosure. In this embodiment, a method of implementing Step S2 in the control method includes following steps:
Step S20': determining whether the robot is in the playback mode;
Step S21': when the robot is in the playback mode, obtaining the sound signal played back by the robot in the playback mode to serve as an invalid sound signal; and

Step S22': filtering out the invalid sound signal from the sound signals collected by the sound signal collection apparatus 3 to obtain the valid sound signal.

In addition, in some other embodiments, in the control method of the present disclosure, after the sound signals are collected using the sound signal collection apparatus 3, the sound signals are first denoised, and then a sound signal played back by the robot is filtered out from the sound signals to obtain the valid sound signal, to further eliminate adverse effects from other sound signals other than the user voice control command.

After the valid sound signal is obtained from Step S2, the control method includes the following step:
Step S3: executing the control command included in the valid sound signal to achieve voice interaction between the robot and the user, thereby improving the usage experience for the user.

Examples of application scenarios are as follows.
I. When the current robot vacuum cleaner is cleaning the floor, the user gives a voice control command of "playing music." After collecting this command, the robot starts playing the stored music. Of course, the user may also select to play required music according to audio data stored in the robot, where the voice control command only needs to include a name of the music.
II. When the current robot vacuum cleaner is in a shutdown or standby state, the user gives a voice control command of "Clean the floor." After collecting this command, the robot starts to clean the floor according to a projected route.
III. When the current robot vacuum cleaner is cleaning the floor and playing music at the same time, the user gives a voice control command of "Stopping playing music." After the robot collects this command and filters out the invalid sound signals produced during playing the music, the robot stops playing the music.

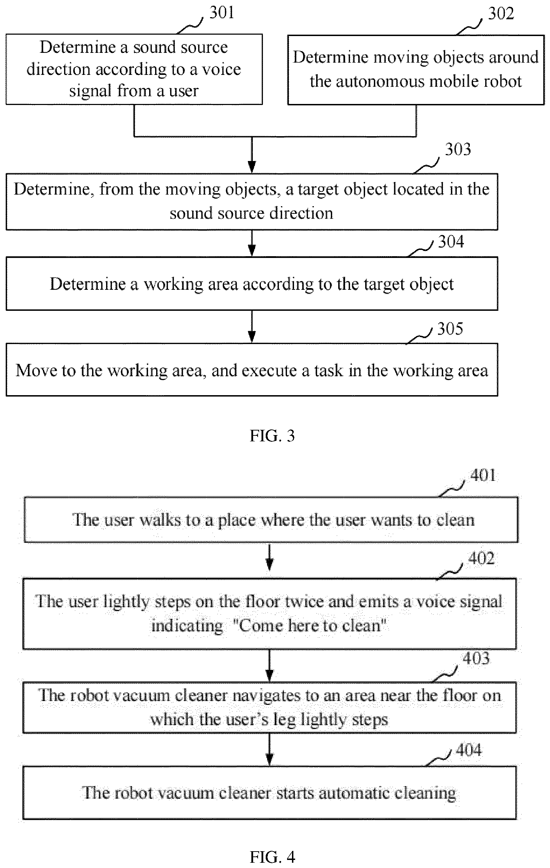

FIG. 3 is a flowchart of the autonomous mobile robot control method provided in an embodiment of the present disclosure. An executing subject of this embodiment is an autonomous mobile robot. This embodiment includes:
Step 301: determining a sound source direction according to a voice signal from a user.

For example, a microphone array on the autonomous mobile robot includes a plurality of microphones, and the autonomous mobile robot can determine the sound source direction according to a time difference of each microphone in receiving the voice signal or sound intensity.

The voice signal typically includes location keywords such as "Come to clean here," "Clean here," "Come here," etc.

After the sound source is determined, the autonomous mobile robot rotates a certain angle such that its front side faces toward the user. The front side of the autonomous mobile robot facing toward the user refers to a fact that a camera of the autonomous mobile robot faces toward the user.

Step 302: determining moving objects around the autonomous mobile robot.

Although the autonomous mobile robot can construct an environmental map and plan a route according to a Simultaneous Localization and Mapping (SLAM) algorithm during movement, the environmental map obtained according to the SLAM algorithm only include stationary objects.

In the embodiments of the present disclosure, a 3D sensor such as a Direct Time-of-Flight (DTOF) sensor or an artificial intelligence (AI) camera is arranged on the autonomous mobile robot, and images are collected by means of the 3D sensor or AI camera, which can determine the moving objects around the autonomous mobile robot.

During traveling of the autonomous mobile robot, the DTOF sensor quickly and continuously performs 360-degree scanning on surrounding environment, extracts the moving objects according to differences between two or several frames, and separates pedestrians from a plurality of moving objects according to movement trajectories and movement patterns of the plurality of moving objects, where those pedestrians located in the sound source direction are treated as target objects, who are to be tracked next.

There may be one or more moving objects around an autonomous mobile device. For example, the autonomous mobile device is a robot vacuum cleaner, which works in a living room. Objects moving in the living room include children, adults, cats, dogs, and balls, etc. Step 303: determining, from the moving objects, a target object located in the sound source direction.

For example, the moving objects may be located in any direction around the autonomous mobile robot at 360 degrees. After the moving objects are determined, the autonomous mobile robot further determines the direction of each moving object relative to the autonomous mobile robot. After the direction of each moving object is determined, a moving object whose direction is the same as the sound source direction is treated as the target object, which is the user emitting the voice signal in Step 301. When the direction of each object does not coincide with the sound source direction, a moving object whose direction is approximate to the sound source direction is treated as the target object.

Because the target object determined on the basis of the 3D sensor has depth information, the autonomous mobile robot can determine spatial locations of the moving objects, and then can determine an initial distance between the autonomous mobile robot and the target object.

Step 304: determining a working area according to the target object.

After the target object is determined, the autonomous mobile robot moves towards the target object. When the target object has not been shifted since the voice signal is emitted, the working area is determined according to an initial location of the target object. For example, a circle is drawn by taking the initial location of the target object as a center and 2 meters as a radius, and the circular area is treated as the working area. It is to be understood that when an object such as a wall is encountered during the process of drawing the circle, the working area is determined in combination with an outline of the object and the circle. By adopting this solution, the autonomous mobile robot can accurately reach the user's designated area.

When the target object undergoes displacement after the voice signal is emitted, or when the target object undergoes displacement after the autonomous mobile robot travels near the target object, the autonomous mobile robot follows the target object until the target object stops moving. Next, the autonomous mobile robot determines the working area according to the location where the target object stops moving. In this solution, the autonomous mobile robot is guided to reach the designated location and executes a task.

Step 305: moving to the working area, and executing a task within the working area.

For example, when the target object has not been shifted, the autonomous mobile robot plans a path according to its own location and the location of the target object, and the autonomous mobile robot is controlled to move near the target object according to this path. Next, the autonomous mobile robot executes the task within the working area. A length of the path is approximately equal to a length of the initial distance between the autonomous mobile robot and the target object.

When the target object undergoes displacement, after the autonomous mobile robot moves near the target object according to the path, the autonomous mobile robot keeps moving at the heels of the target object until the target object stops moving. Next, the autonomous mobile robot executes the task within the working area.

It is to be noted that the "Clean wherever it is" function can also be achieved by means of navigation of a traditional visual sensor. For example, the user says to the robot vacuum cleaner, "Xiao Q, come here to clean." The robot vacuum cleaner recognizes the voice signal and turns to the user, then navigates to the user's location according to visual tracking, and executes a cleaning task within an area near the user's location. However, this implementation manner has following drawbacks. The visual tracking navigation has no depth information and can only determine the user's location on a plane, and thus it is unable to determine the user's accurate spatial location, which leads to unsmooth navigation process and poor experience. Moreover, it is easy to get lost in follow when the user undergoes displacement, which leads to poor experience. The traditional visual sensor may be, for example, a plane camera.

However, in the embodiments of the present disclosure, the traditional visual navigation is not used, instead a 3D sensor such as a laser sensor is used, and the laser sensor is, for example, the DTOF sensor. Each target object determined on the basis of the 3D sensor has depth information, such that the autonomous mobile robot can determine the spatial locations of the moving objects, and then can determine the initial distance between the autonomous mobile robot and the target object. Therefore, during the traveling process, the autonomous mobile robot can accurately reach the working area.

According to the autonomous mobile robot control method provided in the embodiments of the present disclosure, the autonomous mobile robot determines the sound source direction according to the voice signal from the user, and determines the moving objects around the autonomous mobile robot. Next, the autonomous mobile robot determines, from the moving objects, a target object located in the sound source direction, determines a working area according to the target object, and moves to the working area, and executes a task. By adopting this solution, the moving objects have accurate spatial locations because the autonomous mobile robot determines the target object from the moving objects. Therefore, the autonomous mobile robot can accurately determine the target object from a plurality of moving objects according to the sound source direction and accurately reach the working area without the help of a client, and the process is simple and flexible. Moreover, this solution is applicable to all laser-based autonomous mobile robots, and is low in cost, has a simple algorithm and requires lower computing power.

Below, a detailed description of the above autonomous mobile robot control method is made on the basis of several scenarios.

Scenario II: there are no obstacles in the sound source direction, and the autonomous mobile robot determines the target object by means of the AI camera.

In this scenario, the autonomous mobile robot is located in a relatively open area without obstacles around it. The user only needs to emit the voice signal without making actions such as lightly stepping on the floor twice. The autonomous mobile robot determines the target object by means of the AI camera.

For example, when the autonomous mobile robot and the user are located in the same space, after the sound source direction is determined according to the voice signal, the autonomous mobile robot captures images of the sound source direction by means of the AI camera, and determines whether there are any objects other than the pedestrians in the sound source direction according to the images. When there are no objects other than the pedestrians in the sound source direction, it is considered that there are no obstacles in the sound source direction. It is continued to capture images in the sound source direction by means of the AI camera, and the target object is determined according to the images captured by the AI camera. During this process, the user does not need to make actions such as lightly stepping on the floor twice.

Scenario II: there are obstacles that can pass through from below in the sound source direction, and the autonomous mobile robot determines the target object by means of the DTOF sensor.

In this scenario, around the autonomous mobile robot there are obstacles such as end tables and tables that do not need to be bypassed and can be passed through from below. When emitting the voice signal, the user also needs to make actions such as lightly stepping on the floor twice. The autonomous mobile robot determines the target object by means of the DTOF sensor. If the user only emits the voice signal, the autonomous mobile robot prompts the user to make actions such as lightly stepping on the floor twice.

For example, when the user sits on a sofa and the end table is placed in front of the sofa, the autonomous mobile robot is located in front of the end table. From the angle of the AI camera of the autonomous mobile robot, the end table blocks a part of the user's body. After the sound source direction is determined according to the voice signal, the autonomous mobile robot captures the images of the sound source direction by means of the AI camera, and determines that there is the end table in the sound source direction according to the images, where the end table is viewed as the obstacle that can be directly passed through from below. Next, the autonomous mobile robot determines the target object according to SLAM maps and DTOF scatter plots collected by the DTOF sensor.

When the autonomous mobile robot determines that the current scenario is Scenario II, if the autonomous mobile robot does not detect the moving object by means of the DTOF sensor, the autonomous mobile robot may prompt the user to make actions such as lightly stepping on the floor twice, such that the autonomous mobile robot can determine the target object.

FIG. 4 is another flowchart of the autonomous mobile robot control method provided in an embodiment of the present disclosure. In this embodiment, the autonomous mobile robot is specifically a robot vacuum cleaner, and this embodiment includes following steps.

In Step 401, the user walks to a place where the user wants to clean.

In Step 402, the user lightly steps on the floor twice and emits a voice signal indicating "Come here to clean."

An objective of emitting the voice signal by the user is to enable the robot vacuum cleaner to determine the sound source direction. The user lightly steps on the floor to enable the robot vacuum cleaner to determine, after a target object is recognized, a specific spatial location of the target object, where this specific location is also referred to as the initial location.

In Step 403, the robot vacuum cleaner navigates to an area near the floor on which the user's leg lightly steps.

The robot vacuum cleaner navigates, according to the specific spatial location of the target object, to the area near the floor on which the user lightly steps. The area near the floor on which the user lightly steps is the initial location of the target object. Next, the robot vacuum cleaner navigates to a foot of the target object according to a DTOF tracking algorithm. When the user has not experienced displacement, the working area is determined according to the initial location.

When the target object undergoes displacement, the robot vacuum cleaner follows the target object. That is, when the target object keeps moving in the process when the robot vacuum cleaner moves near the target object, or the target object moves after the robot vacuum cleaner moves near the target object, the robot vacuum cleaner follows the target object to reach a designated location, where the designated location is the location at which the target object stops walking. Next, the robot vacuum cleaner determines the working area according to the location at which the target object stops moving.

In Step 404, the robot vacuum cleaner starts automatic cleaning.

Scenario III: there is an obstacle in the sound source direction, and the obstacle completely blocks the pedestrian.

In this scenario, there is a relatively high obstacle in the sound source direction, and the autonomous mobile robot cannot pass through below the obstacle. For example, the obstacle is a refrigerator. For example, the autonomous mobile robot is located in one room and the user is in another room.

After determining the sound source direction according to the voice signal, the autonomous mobile robot captures images of the sound source direction by means of the AI camera, and determines whether there is any obstacle blocking the pedestrian in the sound source direction according to the images. When there is an obstacle blocking the pedestrian in the sound source direction, an approximate navigation path is determined, the images are captured continuously during movement along the navigation path, and the navigation path is adjusted.

In the above embodiment, after the autonomous mobile robot determines the sound source direction, it is needed to further determine the target object from the plurality of moving objects. When the target object undergoes displacement, it is needed to track the target object. The autonomous mobile robot may capture pedestrian images with the camera based on visual tracking, then extract the pedestrian from the images according to an image processing algorithm, and lock the target object for tracking. However, the camera is demanding for environment, requiring that intensity of ambient light need to meet certain conditions. When the intensity of the ambient light is lower, for example, when the images are completely black, high-quality images cannot be captured. Moreover, the image processing algorithm is complex and requires higher computing power of chips, making it difficult to achieve dynamic tracking. When a large number of autonomous mobile robots are equipped with high-quality cameras, the costs will be high.

For this purpose, in the embodiments of the present disclosure, the target object may also be determined and tracked. Below, a detailed description is made on how the autonomous mobile robot determines and tracks the target object by taking an example where the 3D sensor specifically is the DTOF sensor.

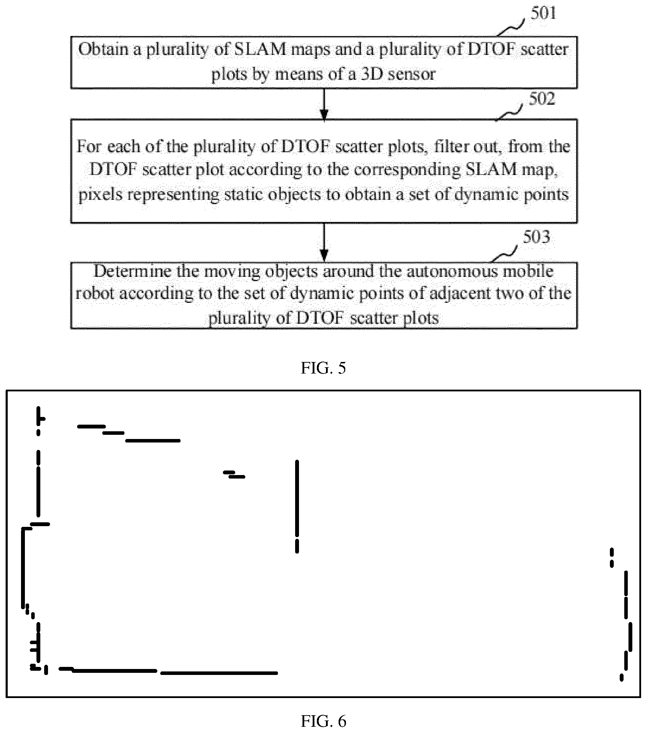

FIG. 5 is a flowchart for determining the target object. This embodiment includes:

Step 501: obtaining a plurality of simultaneous localization and mapping (SLAM) maps and a plurality of direct time-of-flight (DTOF) scatter plots.

SLAM maps among the plurality of SLAM maps correspond one-to-one with DTOF scatter plots among the plurality of DTOF scatter plots.

For example, the autonomous mobile robot scans surrounding environment by means of the DTOF sensor to detect the surrounding environment, thereby obtaining the plurality of SLAM maps and DTOF scatter plots. For example, when synchronously collecting the SLAM maps and the DTOFS scatter plots, the autonomous mobile robot collects five frames of SLAM maps and five frames of DTOF scatter plots in one second, where SLAM maps among the five frames of SLAM maps correspond one-to-one with DTOF scatter plots among the five frames of DTOF scatter plots.

FIG. 6 shows an LAM map. Referring to FIG. 6, only stationary objects such as walls are marked in the SLAM map. When constructing an environmental map based on the SLAM algorithm, the autonomous mobile robot can recognize contours of objects in the surrounding environment and mark them, such as walls, sofas, end tables, beds, etc. Only the walls are marked in FIG. 6, as shown by bold black solid lines in the figure.

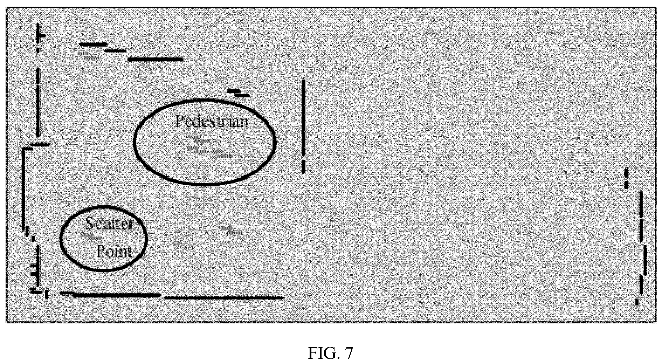

FIG. 7 shows a DTOF scatter plot. Referring to FIG. 7, unlike the SLAM map, the DTOF scatter plot has both pixels representing static objects and pixels representing moving objects. The bold black solid lines in the figure represent the walls, and solid line ellipses represent the pedestrian and scatter points, respectively.

Step 502: for each of the plurality of DTOF scatter plots, filtering out, from the DTOF scatter plot according to the corresponding SLAM map, pixels representing static objects to obtain a set of dynamic points.

For example, it is unable to recognize which points represent the wall, and which points represent the sofas, the end tables, the beds, and so on only by means of the DTOF scatter plots. Therefore, in one embodiment, for each pair of SLAM map and DTOF scatter plot, collection time and collection angle are the same. Therefore, according to the SLAM map, it is able to recognize, from the DTOF scatter plot, which points represent the walls and which points represent the sofas, the end tables, the beds, etc. That is, the pixels representing the static objects in the DTOF scatter plot can be recognized. Next, the pixels representing the static objects are filtered out from the DTOF scatter plot to obtain a set of dynamic points. This set of dynamic points includes some scatter points and points corresponding to the moving objects.

In another embodiment, for each frame of DTOF scatter plot, the points representing the objects such as the walls and the sofas in the DTOF scatter plot are determined according to the corresponding SLAM map. Next, for any adjacent two frames of DTOF images, the points on the two frames of scatter plots are all drawn on the same blank image. When one object is a stationary object, the points representing this stationary object in the two frames of DTOF scatter plots are at the same location. When one object is a moving object, the points representing the moving object in the two frames of DTOF scatter plots are at different locations and are similar to each other. Therefore, the set of dynamic points can be determined after the pixels in adjacent two DTOF scatter plots are drawn on the same blank image. This set of dynamic points includes some scatter points and points corresponding to the moving objects.

In an actual implementation process, when the same object in two frames of DTOF scatter plots is mapped to the same location in the blank image, all the points corresponding to this object are represented by color a, and this object is a stationary object. The pixels corresponding to rest of the objects are represented by another color b. Apparently, only the moving objects and the scatter points use the color b, while the stationary objects use the color a. After some simple filtering, it is easy to recognize the moving objects and the stationary objects.

In addition, the objective of collecting the SLAM maps and the DTOF scatter plots by the autonomous mobile robot is to find and follow the target object, which is generally a pedestrian. Therefore, to reduce computational complexity, other moving objects such as rolling balls do not need to be considered. In this case, after the moving objects around the autonomous mobile robot are determined, before determining the target object located in the sound source direction from the moving objects, the autonomous mobile robot also determines, from the plurality of moving objects according to characteristics such as human walking gait and movement speed, a target object which likely is a pedestrian, thereby filtering out some scatter points.

Step 503: determining the moving objects around the autonomous mobile robot according to the set of dynamic points of adjacent two of the plurality of DTOF scatter plots.

As an example, the scatter points in different DTOF images have different locations, and there is no rule to find. No rules can be summarized even though the scatter points in adjacent two frames of DTOF images are drawn onto the same blank image. However, the moving objects are different. When the same moving object in adjacent two frames of DTOF images is drawn onto the same blank image, this moving object is located in two different locations, and a distance between the two locations satisfies certain conditions, and points in point sets at the two locations are approximate in number.

For example, when one ball is rolling, there are no pixels representing the ball in the SLAM map. However, there are point sets representing the ball in both adjacent two DTOF scatter plots. In the previous DTOF scatter plot, the point set representing the ball is located at location A in the blank image, while in the latter DTOF scatter plot, the point set representing the ball is located at location B in the blank image. The number of the pixels in the point set at the location A is approximately equal to that of the pixels in the point set at the location B, and a shape formed by the point set at the location A is similar to that formed by the point set at the location B.

By adopting this solution, the objective of determining the moving and stationary objects around the autonomous mobile robot according to the adjacent two DTOF scatter plots and the SLAM map may be achieved.

Alternatively, in the above embodiment, in the process of determining the moving objects around the autonomous mobile robot according to the set of dynamic points of adjacent two of the plurality of DTOF scatter plots, first of all, a first subset is determined from a first set of dynamic points of a first DTOF scatter plot. Next, the autonomous mobile robot determines whether there is a second subset in a second set of dynamic points of a second DTOF scatter plot, where a distance between a first location indicated by the first subset and a second location indicated by the second subset is greater than a preset distance, and a differential between number of the pixels in the first subset and number of the pixels in the second subset is less than a preset differential, and the first DTOF scatter plot and the second DTOF scatter plot are any two adjacent DTOF scatter plots among the plurality of DTOF scatter plots. When the second subset exists in the second set of dynamic points, the autonomous mobile robot determines that the first subset and the second subset represent a same object and the object is a moving object.

For example, the preset distance represents a minimum distance between the first location and the second location when an object is the moving object. The set of dynamic points of each DTOF scatter plot may include point sets corresponding to one or more moving objects and some scatter points. The autonomous mobile robot determines the first subset from the first set of dynamic points of the first DTOF scatter plot, and the first subset includes a plurality of relatively concentrated pixels. Next, the autonomous mobile robot determines whether there is a second point set in the second set of dynamic points of the second DTOF scatter plot. When there is the second point set in the second set of dynamic points, it indicates that the first point set and the second point set represent the same object and that this object is a moving object. When the second point set does not exist in the second set of dynamic points, it indicates that the pixels in the first point set are some scatter points. In addition, when the number of some pixels is relatively small and cannot represent one object, these pixel points are scatter points, for example, one or several points. Alternatively, because the target object is generally a pedestrian, the autonomous mobile robot estimates a walking speed of the target object and filters out objects that do not meet conditions such as the walking speed of the target object.

Still taking the rolling ball as an example, when the speed of the ball is 1 meter per second and an acquisition rate of the DTOF sensor is 5 frames per second, the distance between the location coordinates of the ball in the first DTOF scatter plot and the location coordinates of the ball in the second DTOF scatter plot is about 20cm. Therefore, when the distance between the location A corresponding to the first subset and the location B corresponding to the second subset is 20cm and the number of the pixels in the first subset is approximate to that of the pixels in the second subsets, it indicates that the first subset and the second subset represent the same object and that the object is the moving object.

By adopting this solution, it is achieved the objective of determining the moving objects around the autonomous mobile robot according to a set of dynamic points.

Alternatively, in the above embodiments, the objective of collecting the SLAM maps and the DTOF scatter plots by the autonomous mobile robot is to find and follow the target object, which is generally a pedestrian. Therefore, to reduce computational complexity, other moving objects such as the rolling balls do not need to be considered. In this case, after the moving objects around the autonomous mobile robot are determined, before determining the target object located in the sound source direction from the moving objects, the autonomous mobile robot also determines, from the plurality of moving objects according to characteristics such as human walking gait and movement speed, a target object which likely is a pedestrian, and then determines the target object located in the sound source direction from the pedestrians.

In the process of the determining, from the pedestrians, the target object located in the sound source direction, the autonomous mobile robot determines, from the moving objects, a moving object that makes a motion on a foot and is located in the sound source direction to obtain the target object.

For example, a height of the autonomous mobile robot generally is limited. Taking the robot vacuum cleaner as an example, because the height of the robot vacuum cleaner generally is 10cm, the robot vacuum cleaner can only capture the DTOF images within a height range of 10cm. Considering limitations on field of view of the DTOF sensor of the autonomous mobile robot, when the user issues a voice command, the user needs to make an action with feet, such as lightly stepping on the floor twice, switching from putting left and right feet together to spreading the left and right feet at a certain angle, and switching from spreading the left and right feet at a certain angle to putting the left and right feet together. When the user makes gestures such as waving, applauding, and shaking head, although the user makes actions, these actions cannot be collected by the DTOF sensor because they are not in the field of view of the DTOF sensor. Therefore, these actions cannot implement the solutions of the present disclosure.

In the embodiments of the present disclosure, a pre-trained model is deployed on an upper part of the autonomous mobile robot, and the pre-trained model can recognize the user's action of lightly stepping on the floor according to the DTOF scatter plot. When the first and second subsets of adjacent two DTOF scatter plots are inputted into the model and it is determined, according to the model, that the action of the moving object represented by the first and second subsets is to lightly step on the floor, it is determined that the moving object is the target object when the moving object is located in the sound source direction.

By adopting this solution, a moving object is not determined as the target object unless this moving object must make the action of lightly stepping on the floor and this moving object is located in the sound source direction, thereby achieving the objective of accurately determining the target object.

In the above way, the moving objects around the autonomous mobile robot are determined, and the target object is determined from the moving objects. A detailed description is made below on how to follow the target object.

Alternatively, in the above embodiments, the autonomous mobile robot determines the target object and moves towards it. Next, when the target object undergoes displacement, that is, when the target object moves, navigation technologies are employed to follow the target object until it stops moving. Next, the autonomous mobile robot determines the working area according to the location at which the target object stops moving.

In the process of following the target object by using the navigation technologies, the autonomous mobile robot can follow the target object according to local planning algorithms, etc. The local planning algorithms include a Vector Field Histogram (VFH) algorithm, a Dynamic Window Approach (DWA) algorithm, and so on. From the perspective of hardware used, the "follow" includes follow based on the DTOF sensor and follow based on the AI camera.

In the follow mode based on the DTOF sensor, the autonomous mobile robot determines whether the target object appears in both the adjacent two DTOF scatter plots. When the target object appears in both the adjacent two DTOF scatter plots, a differential between the preset distance and the distance between the target objects in the adjacent two DTOF scatter plots is determined. Next, the speed is adjusted according to the differential to follow the target object to move.

Taking an example where a normal walking speed of the user is 1 meter per second and the speed of collecting the DTOF scatter plots by the autonomous mobile robot is 200 milliseconds per frame, the distance between the location coordinates of the target objects in the adjacent two DTOF scatter plots is approximately 20 centimeters. Therefore, during the follow process, for any adjacent two DTOF scatter plots, the autonomous mobile robot determines whether the target object appears in both the two DTOF scatter plots. When the target object appears in both the two DTOF scatter plots, this indicates that it does not get lost in follow.

Alternatively, the autonomous mobile robot determines, in the first frame of DTOF scatter plot (the previous frame), the location coordinates of the target object. Next, according to the direction of travel, the autonomous mobile robot determines, in the second frame of DTOF scatter plot (the latter frame), whether there is a target object at a location 20 centimeters away from the location coordinate. When there is the target object, this indicates that it does not get lost in follow, and it is continued to follow the user.

When it gets lost in follow, the target object is searched for according to the DTOF scatter plot of the last frame where the target object appeared and the DTOF scatter plot prior to this frame. Alternatively, the autonomous mobile robot issues a voice prompt such as "Oh, I'm lost, please guide me to move forward."

When it does not get lost in follow, after collecting a DTOF scatter map each time, the autonomous mobile robot calculates a distance between the target objects according to this DTOF scatter map and the previous DTOF scatter map, and compares the distance with the previous distance. When the distance increases, it indicates that the target object's movement speed increases, and the autonomous mobile robot increases its speed to follow the target object. When the distance decreases, it indicates that the target object's movement speed slows down, and the autonomous mobile robot slows down its speed to follow the target object. When the distance remains constant, it indicates that the target object's movement speed remains unchanged, and the autonomous mobile robot maintains its current speed to follow the target object.

By adopting this solution, the objective of following the target object to move according to the DTOF sensor is achieved.

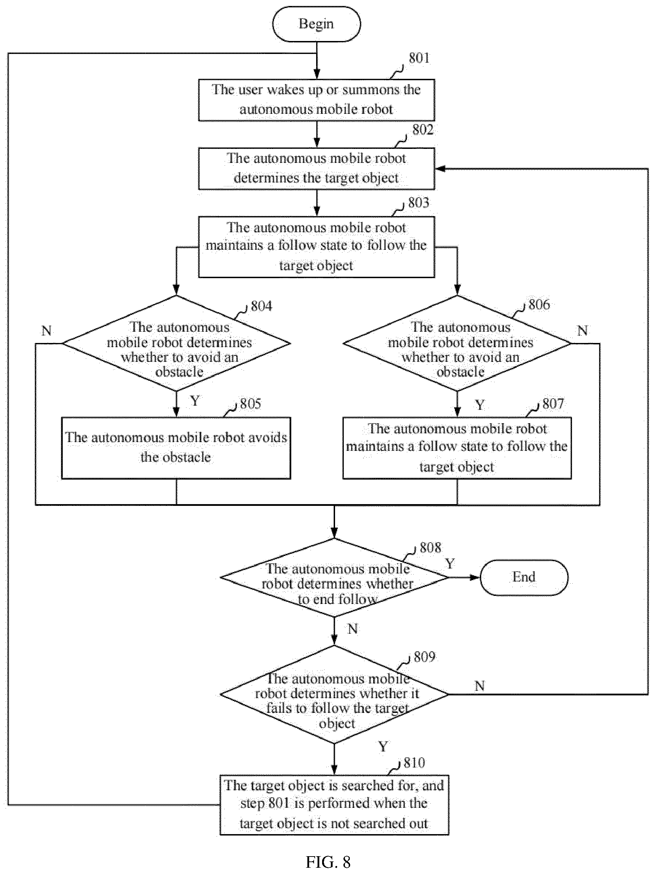

FIG. 8 is a follow flowchart based on the AI camera in the autonomous mobile robot control method provided in an embodiment of the present disclosure. This embodiment includes following steps.

In Step 801, the user wakes up or summons the autonomous mobile robot.

The user says a wake-up message to the autonomous mobile robot to wake up the autonomous mobile robot. For example, when the wake-up message is "Xiao Q, Xiao Q" and a voice control function of the autonomous mobile robot is in a wake-up waiting state, after the user issues the voice signal of "Xiao Q, Xiao Q," the voice control function of the autonomous mobile robot is woken up. Next, the user and the autonomous mobile robot engage in voice interaction.

The user says a conversion keyword to the autonomous mobile robot to summon it. For example, the summoning keyword is "Xiao Q, come here to clean." After the voice control function of the autonomous mobile robot is woken up and the user issues the voice signal of "Xiao Q, come here to clean," the autonomous mobile robot recognizes the summoning and moves towards the user.

In addition, the summoning keyword also has both a wake-up function and a summoning function. For example, the voice control function of the autonomous mobile robot is in the wake-up waiting state. After the user issues the voice signal "Xiao Q, come here to clean," the voice control function of the autonomous mobile robot is woken up. Meanwhile, the autonomous mobile robot recognizes the summoning and moves towards the user.

After the autonomous mobile robot is woken up or summoning is recognized, the autonomous mobile robot rotates a certain angle by means of stereo microphone localization to ensure that the autonomous mobile robot basically faces towards the user, and the autonomous mobile robot continues rotating until the AI camera can capture images of the user, and the user is located by means of these images captured by the AI camera, such that the AI camera of the autonomous mobile robot faces towards the user.

In Step 802, the autonomous mobile robot determines the target object.

The autonomous mobile robot accurately faces the user by means of AI humanoid localization. When the AI camera captures a plurality of users, it emits a prompt message to prompt the users to make specific actions, such as waving their hands or shaking their heads, such that the target object is determined again. The AI humanoid localization algorithm provides an angle of the target object with respect to the autonomous mobile robot and a skeleton diagram of the target object.

In Step 803, the autonomous mobile robot maintains a follow state to follow the target object. Steps 804 and 806 are performed during the follow process.

In Step 804, the autonomous mobile robot determines whether to avoid an obstacle. When obstacle avoidance is required, Step 805 is performed, otherwise Step 808 is performed.

In Step 805, the autonomous mobile robot avoids the obstacle, and then Step 808 is performed.

When detecting that there are obstacles between the autonomous mobile robot and the target object, the autonomous mobile robot switches to an obstacle avoidance mode, determines the nearest obstacle based on LDS and line laser data, determines the contour of the obstacle, and then selects a direction that is easier to avoid the obstacle. Next, Step 802 is performed.

In Step 806, the autonomous mobile robot determines whether to avoid an obstacle. When obstacle avoidance is required, Step 807 is performed, otherwise Step 808 is performed.

In Step 807, the autonomous mobile robot avoids the obstacle, and then Step 808 is performed.

The autonomous mobile robot can obtain floor information by means of a line laser sensor or the like, and then it is recognized whether there is any step or cliff in front of the autonomous mobile robot. If there is any step or cliff, obstacle crossing is required.

To ensure that the line laser sensor of the autonomous mobile robot can achieve the same effective distance on different material floors, the line laser sensor adopts a dynamic exposure solution, which increases an exposure value on materials with lower reflectivity to obtain more effective data, and reduces the exposure value on materials with higher reflectivity to obtain more accurate data. The autonomous mobile robot can recognize height of the step or cliff according to data provided by the line laser sensor, and determines an obstacle crossing strategy according to the height of the step or cliff.

In Step 808, the autonomous mobile robot determines whether to end follow, and ends follow when a determination result is YES, otherwise Step 809 is performed.

In Step 809, the autonomous mobile robot determines whether it fails to follow the target object. Step 802 is performed when the autonomous mobile robot does not fail to follow the target object, otherwise Step 810 is performed.

In Step 810, the target object is searched for, and Step 801 is performed when the target object is not searched out.

For example, due to limitations on mobility of the autonomous mobile robot, there is a certain probability of getting lost in follow. In the event of getting lost in follow, the autonomous mobile robot determines a search range according to coordinates of a location where the target object is last seen, and searches for the target object within the search range. The search range is, for example, a circular range circled with the coordinates of the location where the target object is last seen as a center and a preset radius as a radius. The circular range is, for example, x square meters,
When the target object is searched out, it is continued to follow the target object. When the target object is not searched out, it is got into a summon waiting state to wait for the user to summon again. In addition, when the autonomous mobile robot cannot find the user, it may also send a prompt message such as "I get lost in follow, come and guide me" to guide the target object to the autonomous mobile robot.

By adopting this solution, the autonomous mobile robot can follow the target object by means of the AI camera with sensitive response and lower costs, which can effectively prevent from getting lost or making mistakes in follow. Furthermore, the autonomous mobile robot also has the capability to obstacle avoidance and obstacle crossing. Moreover, when getting lost in follow, the autonomous mobile robot executes logic of getting lost in follow, to automatically search for the target object or prompt the user to guide the autonomous mobile robot again, which is a simple process.

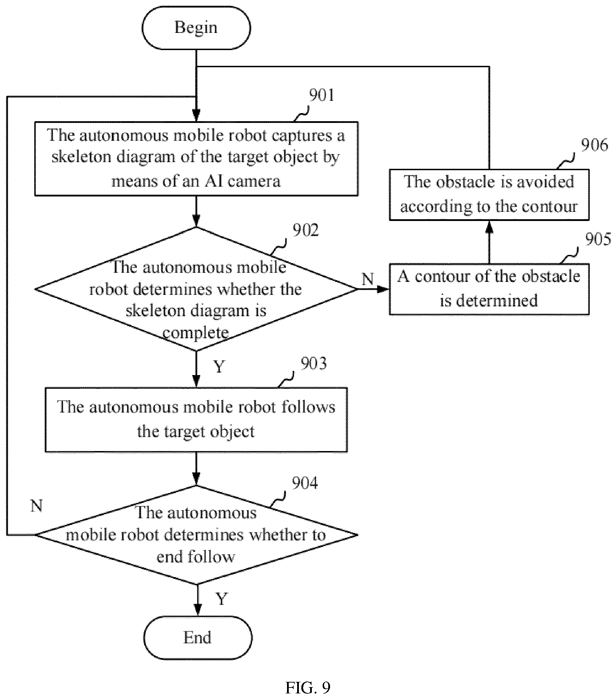

FIG. 9 is a flowchart of the autonomous mobile robot maintaining a follow state. This embodiment includes following steps.

In Step 901, the autonomous mobile robot captures a skeleton diagram of the target object by means of an artificial intelligence (AI) camera.

In Step 902, the autonomous mobile robot determines whether the skeleton diagram is complete. When the skeleton diagram is complete, Step 903 is performed, otherwise Step 905 is performed.

For example, the autonomous mobile robot determines whether there is an obstacle between the autonomous mobile robot and the target object according to integrity of the skeleton diagram. When the AI camera captures a complete skeleton diagram, it indicates that there is no any obstacle between the autonomous mobile robot and the target object. In this case, the autonomous mobile robot determines, according to data from the laser sensor, a point of the target object the closest to the autonomous mobile robot in a direction where the AI camera is located as the location coordinates of the target object, then moves towards the target object and maintains a fixed distance from the target object. The laser sensor may be, for example, the DTOF sensor, or a Laser Direct Structuring (LDS) sensor, etc.

When the skeleton diagram of the target object captured by the AI camera is incomplete, it indicates an obstacle is present between the autonomous mobile robot and the target object. The data from the laser sensor is likely to be obstructed by the obstacle, making it impossible for the autonomous mobile robot to obtain the data from the laser sensor and thus unable to follow. In this case, the laser sensor tries to avoid the obstacle by means of obstacle avoidance or obstacle crossing until the AI camera can capture the complete skeleton diagram of the target object. Next, the autonomous mobile robot follows the target object.

In Step 903, the autonomous mobile robot follows the target object.

In Step 904, the autonomous mobile robot determines whether to end follow, and ends follow when a determination result is YES, otherwise Step 901 is performed.

For example, when the target object keeps moving, it indicates that the follow has not yet ended. When the target object stops moving, it indicates that the follow has ended.

In Step 905, the contour of the obstacle is determined.

In Step 906, the obstacle is avoided according to the contour, and then Step 901 is performed.

In the above embodiments, in one implementation, during the follow process, the autonomous mobile robot only follows the target object to move but does not work. For example, during the follow process of the robot vacuum cleaner, it does not perform cleaning or mopping functions until when the target object stops moving, the robot vacuum cleaner determines the working area according to the location where the target object stops moving, and works within the working area.

In another implementation, during the follow process of the autonomous mobile robot, it is ensured that the autonomous mobile robot can interact with the target object while maintaining a certain distance between the autonomous mobile robot and the target object. Taking playing music while following as an example, the autonomous mobile robot performs a music playback function. At this moment, the target object summons the autonomous mobile robot, and the autonomous mobile robot follows the target object. During the follow process, the autonomous mobile robot maintains music playback. When the target object stops moving, the autonomous mobile robot maintains a certain distance from the target object and always faces toward the target object to achieve the best music playback effect.

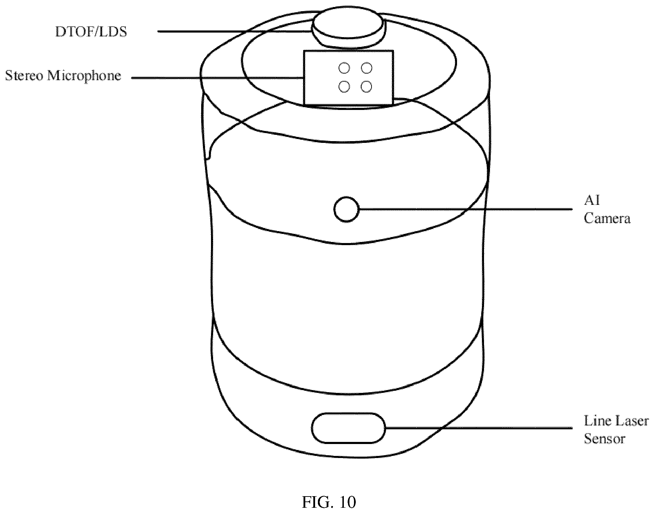

FIG. 10 is a schematic structural diagram of the autonomous mobile robot. Referring to FIG. 10, the autonomous mobile robot is, for example, an air purification robot, which is equipped with the DTOF sensor, the LDS sensor, a stereo microphone, the AI camera, and the line laser sensor, etc.

The following embodiments are apparatus embodiments of the present disclosure, which may be used for executing the method embodiments of the present disclosure. Reference is made to the method embodiments of the present disclosure for undisclosed details about the apparatus embodiments of the present disclosure.

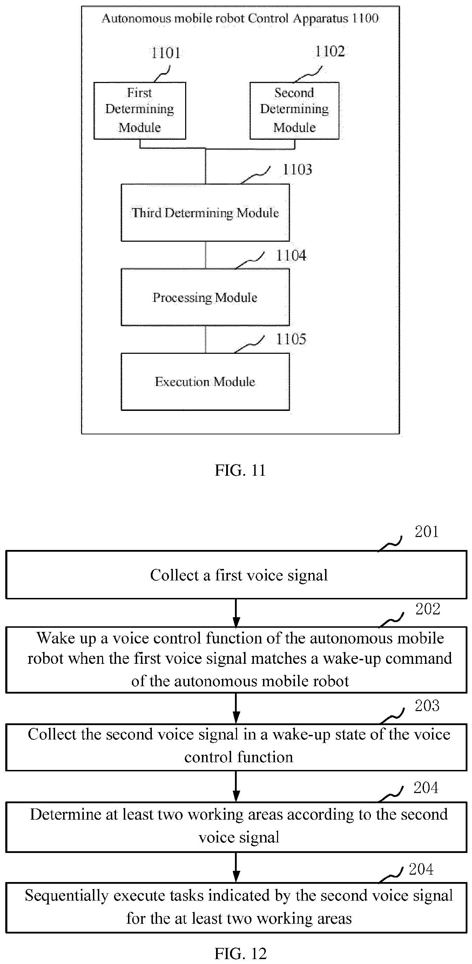

FIG. 11 is a schematic structural diagram of an autonomous mobile robot control apparatus provided in an embodiment of the present disclosure. The autonomous mobile robot control apparatus 1100 includes: a first determining module 1101, a second determining module 1102, a third determining module 1103, a processing module 1104, and an execution module 1105.

The first determining module 1101 is configured to determine a sound source direction according to a voice signal from a user.

The second determining module 1102 is configured to determine moving objects around the autonomous mobile robot.

The third determining module 1103 is configured to determine, from the moving objects, a target object located in the sound source direction.

The processing module 1104 is configured to determine a working area according to the target object.

The execution module 1105 is configured to move to the working area and execute a task within the working area.

In a feasible implementation manner, the second determining module 1102 is configured to: obtain a plurality of simultaneous localization and mapping (SLAM) maps and a plurality of direct time-of-flight (DTOF) scatter plots, where SLAM maps among the plurality of SLAM maps correspond one-to-one with DTOF scatter plots among the plurality of DTOF scatter plots; for each of the plurality of DTOF scatter plots, filter out, from the DTOF scatter plot according to the corresponding SLAM map, pixels representing static objects to obtain a set of dynamic points; and determine the moving objects around the autonomous mobile robot according to the set of dynamic points of adjacent two of the plurality of DTOF scatter plots.

In a feasible implementation manner, when determining the moving objects around the autonomous mobile robot according to the set of dynamic points of adjacent two of the plurality of DTOF scatter plots, the second determining module 1102 is configured to: determine a first subset from a first set of dynamic points of a first DTOF scatter plot; determine whether there is a second subset in a second set of dynamic points of a second DTOF scatter plot, where a distance between a first location indicated by the first subset and a second location indicated by the second subset is greater than a preset distance, and a differential between number of the pixels in the first subset and number of the pixels in the second subset is less than a preset differential, and the first DTOF scatter plot and the second DTOF scatter plot are any two adjacent DTOF scatter plots among the plurality of DTOF scatter plots; and when the second subset exists in the second set of dynamic points, determine that the first subset and the second subset represent a same object and the object is a moving object.

In a feasible implementation manner, the third determining module 1103 is configured to determine, from the moving objects, a moving object that makes a motion on a foot and is located in the sound source direction to obtain the target object.

In a feasible implementation manner, the processing module 1104 is configured to move to a location having the preset distance from the target object, and determine the working area according to an initial location of the target object when the target object does not undergo displacement.

In a feasible implementation manner, the processing module 1104 is configured to control, after moving to the location having the preset distance from the target object, the autonomous mobile robot to follow the target object to move when the target object undergoes displacement, and determine, when the target object stops moving, the working area according to a location where the target object stops moving.

In a feasible implementation manner, when controlling the autonomous mobile robot to follow the target object to move, the processing module 1104 is configured to: determine whether the target object appears in both adjacent two DTOF scatter plots;
when the target object appears in both the adjacent two DTOF scatter plots, determine a distance between the target objects in the adjacent two DTOF scatter plots; and
adjust a speed according to the distance to follow the target object to move.

In a feasible implementation manner, when controlling the autonomous mobile robot to follow the target object to move, the processing module 1104 is configured to: capture a skeleton diagram of the target object by means of an artificial intelligence (AI) camera; maintain a follow state to follow the target object to move when the skeleton diagram is complete; and when the skeleton diagram is incomplete, avoid or surmount an obstacle between the autonomous mobile device and the target object until the autonomous mobile robot maintains the follow state to follow the target object to move after the AI camera captures the complete skeleton diagram.

In a feasible implementation manner, before the first determining module 1101 determines the sound source direction according to the voice signal from the user, the processing module 1104 is further configured to wake up the autonomous mobile robot, and determine a control instruction corresponding to the voice signal to control the autonomous mobile robot to determine the working area in real time according to the target object.

In a feasible implementation manner, the processing module 1104 is further configured to: determine whether the target object is missing; when the target object is missing, determine a search range according to coordinates of a location where the target object is last seen; search for the target object within the search range; and get into a summon waiting state when the target object is not searched out.

The autonomous mobile robot control apparatus provided in the embodiments of the present disclosure can perform the actions of the autonomous mobile robot in the above embodiments, and implementation principles and technical effects thereof are similar, and thus are not to be described in detail here.

With the progress of science and technology, robots are increasingly entering people's lives, playing an important role in their lives. At present, the robots can be operated through host physical keys, smartphone applications (APP), and remote controllers, etc. These operating methods all have drawbacks. For this reason, the manner of controlling the robots through voice is widely welcomed by users due to its intelligence. After collecting voice signals, robots with voice recognition functions recognize these voice signals, and execute related tasks.

However, current voice commands can only control the robots to start, execute tasks, stop, and charge, etc. The current voice commands are unable to achieve precise control of the robots. For example, when the users want the robots to execute tasks in a specific area, they need to transport the robots to the specific area and then control the robots through voice. For another example, when some areas are prohibited areas, such as restrooms, the users need to close the restrooms while the robots are working, to prevent the robots from entering the prohibited areas.

For still another example, sometimes when the users want the robots to execute tasks on a plurality of areas, they need to move the robots to one of the areas. After the robots complete the tasks in this area, they move the robots to another area. Although some of the robots can recognize the working area indicated by the user, the prerequisite is that the voice from the user can only indicate one working area. When the user wants to execute the tasks on the plurality of areas, the user needs to indicate a next working area through voice each time after the robot executes the tasks, which is a cumbersome process.

Based on this, the embodiments of the present disclosure also provide an autonomous mobile robot control method and apparatus, a device, and a readable storage medium. A plurality of working areas are indicated to the autonomous mobile robot through a voice signal, enabling the autonomous mobile robot to sequentially execute tasks on the plurality of working areas with high accuracy and simple process.

FIG. 12 is a flowchart of the autonomous mobile robot control method provided in an embodiment of the present disclosure. An executing subject of this embodiment is the autonomous mobile robot, and this embodiment includes following steps.

Step 201: collecting a first voice signal.

Step 202: waking up a voice control function of the autonomous mobile robot when the first voice signal matches a wake-up command of the autonomous mobile robot.

The autonomous mobile robot is provided with a sound signal collection apparatus, which may be, for example, a microphone, and a microphone array, etc. When the voice control function of the autonomous mobile robot is not woken up, the sound signal collection apparatus continuously collects the first voice signal in the surrounding environment to recognize the first voice signal. The voice control function of the autonomous mobile robot is woken up when the first voice signal matches the wake-up command of the autonomous mobile robot. The voice control function is maintained in a wake-up waiting state when the first voice signal does not match the wake-up command of the autonomous mobile robot.

When the voice control function is woken up, after the autonomous mobile robot collects a second voice signal, the second voice signal is sent to a cloud-based voice recognition server, such that the voice recognition server determines whether the second voice signal matches the control command. When the voice control function is in the wake-up waiting state, the autonomous mobile robot locally recognizes whether the first voice signal collected matches the wake-up command.

Step 203: collecting the second voice signal in a wake-up state of the voice control function.

After the voice control function of the autonomous mobile robot is woken up, the autonomous mobile robot can collect the voice signal from the surrounding environment by means of the sound signal collection apparatus. For example, the second voice signal from the user is collected.

Step 204: determining at least two working areas according to the second voice signal.

When the autonomous mobile robot itself has the voice recognition function, it recognizes the second voice signal to determine at least two working areas. Alternatively, the autonomous mobile robot sends the second voice signal to the voice recognition server, such that the voice recognition server determines at least two working areas and indicates them to the autonomous mobile robot. For example, when text content corresponding to the second voice signal is "Clean Xiaoming's Room and Study," the at least two working areas are Xiaoming's Room and Study. For another example, when the text content corresponding to the second voice signal is "Clean all carpet areas," the working areas are a plurality of areas centering on carpets and including the carpets.

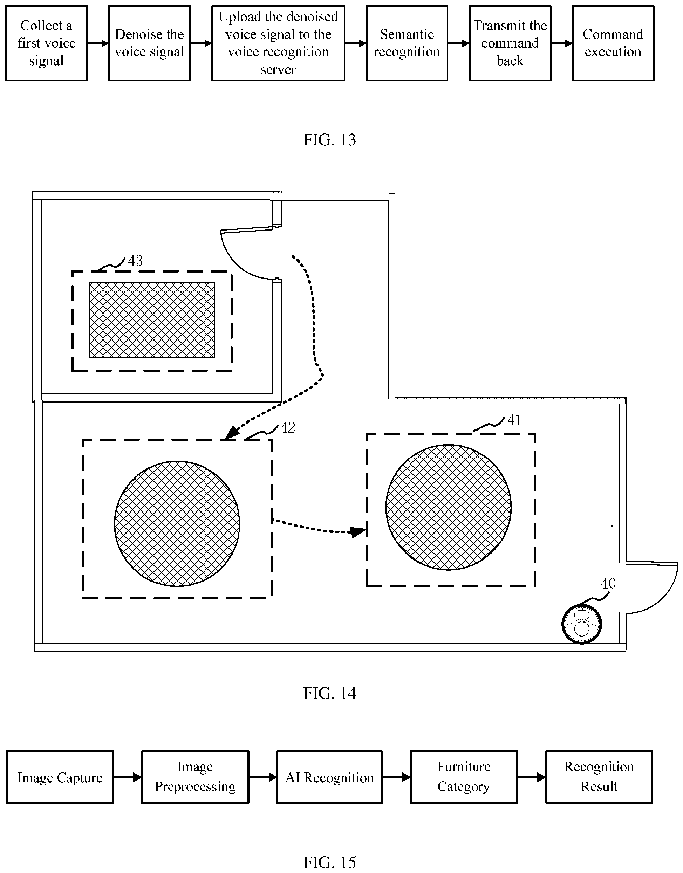

FIG. 13 is a schematic diagram of a voice recognition process in an embodiment of the present disclosure. Referring to FIG. 13, during the voice recognition process, the autonomous mobile robot collects the second voice signal, denoises the second voice signal, and uploads the denoised second voice signal to the voice recognition server. The voice recognition server performs semantic recognition on the second voice signal to obtain a voice command, and transmits the voice command back to the autonomous mobile robot. After receiving voice command, the autonomous mobile robot executes a task indicated by the voice command. The task may include cleaning, mopping, mowing, purifying the air, etc.

It is to be noted that reference is made in FIG. 13 by taking an example where the autonomous mobile robot collects the second voice signal. However, the embodiments of the present disclosure are not limited thereto. In other feasible implementation manners, the user may also launch a client on a terminal device and then send the second voice signal. The terminal device collects the second voice signal, denoises the second voice signal, and uploads the denoised second voice signal to the voice recognition server.

Step 205: sequentially executing tasks indicated by the second voice signal for the at least two working areas.

The autonomous mobile robot executes the tasks for the working areas in a certain order. For example, the autonomous mobile robot randomly sorts the working areas to obtain a random queue, and executes the tasks for the working areas in an order indicated by the random queue.

For another example, when the user expects to execute a cleaning task and other tasks for a plurality of working areas and the user expects to give priority to executing the cleaning task for one of the working areas, the second voice signal may be issued in order of priority. The autonomous mobile robot determines a sequential order when each of the at least two working areas appears in the second voice signal. Next, the autonomous mobile robot sequentially executes the task indicated by the second voice signal for the at least two working areas according to the sequential order.

Taking an example where the autonomous mobile robot is the air purification robot, when the user wants to purify air in the study and a baby room and wants to give priority to purifying the air in the baby room, the second voice signal is "Please purify the baby room and the study." The autonomous mobile robot determines the working areas as the baby room and the study according to the second voice signal, and gives priority to the baby room. In this case, even though the study is closer to the autonomous mobile robot and the baby room is farther from the autonomous mobile robot, the autonomous mobile robot may first enter the baby room, complete air purification in the baby room, and then move to the study to purify the air therein.

By adopting this solution, the autonomous mobile robot executes the tasks for the plurality of working areas according to priority, which meets the user's needs to a great extent and makes it more user-friendly.

For still another example, because there are many working areas and there is a certain distance between the working areas, it consumes a lot of energy and takes a long time when the autonomous mobile robot executes the tasks for the working areas in a random order. For this reason, after determining the plurality of working areas, the autonomous mobile robot determines a distance between the autonomous mobile robot itself and each of the at least two working areas. Next, the autonomous mobile robot sorts the at least two working areas in order of distance from nearest to farthest to obtain a queue, and sequentially executes the task indicated by the second voice signal for the at least two working areas according to the queue.

For example, when the second voice signal is "Clean all carpet areas," the autonomous mobile robot determines all areas including carpets from the environmental map, referring to FIG. 14. FIG. 14 is a schematic diagram of carpet areas.

Referring to FIG. 14, there are three carpet areas in the figure, i.e., a carpet area 41, a carpet area 42, and a carpet area 43. The autonomous mobile robot 40 determined that the carpet area 41 is the closest to it, followed by the carpet area 42, and finally the carpet area 43. Therefore, a cleaning order is the carpet area 41, the carpet area 42, and the carpet area 43.

By adopting this solution, the autonomous mobile robot executes the tasks for the working areas in order of distance from nearest to farthest, which can minimize energy consumption and increase speed.

It is to be noted that in the above description, the autonomous mobile robot is operated through voice operation to execute the tasks for the plurality of working areas. However, the embodiments of the present disclosure are not limited thereto, and in other feasible implementation manners, the autonomous mobile robot may also be operated through voice operation to execute a task for a single working area.

According to the autonomous mobile robot voice control method provided in the embodiments of the present disclosure, after collecting a second voice signal, the autonomous mobile robot determines at least two working areas according to the second voice signal, and sequentially executes the tasks indicated by the second voice signal for each working area. By adopting this solution, a plurality of working areas can be indicated to the autonomous mobile robot through a single voice signal, such that the autonomous mobile robot can sequentially execute the tasks for the plurality of working areas. The user can interact with the autonomous mobile robot through natural language to achieve extremely simple control of the autonomous mobile robot with high accuracy and simple process.

Alternatively, in the above embodiment, during the process of sequentially executing the task indicated by the second voice signal for the at least two working areas, after completing the task for one of the at least two working areas, the autonomous mobile robot stops executing the task before moving to a next working area.

After the at least two working areas are determined, the autonomous mobile robot sequentially executes the tasks for the working areas in a certain order. When a distance between two adjacent working areas is longer, the autonomous mobile robot can turn off a working module during the process of moving from one working area to the other working area according to a traveling path. That is, the autonomous mobile robot does not execute the tasks such as cleaning and mowing while traveling along the traveling path.

Referring to FIG. 14 again, the second voice signal is "Clean the carpet area 43, the carpet area 42, and the carpet area 41." The autonomous mobile robot 40 moves from a current location to the carpet area 43. During this process, the working module of the autonomous mobile robot 40 is in an off state. When the autonomous mobile robot 40 travels from the carpet area 43 to the carpet area 42 after it completes cleaning of the carpet area 43, and when the autonomous mobile robot 40 travels from the carpet area 42 to the carpet area 41 after it completes cleaning of the carpet area 42, the working module is turned off on the traveling path, where the traveling path is shown by dashed arrows in the figure.

By adopting this solution, the autonomous mobile robot does not need to start the working module during the process of moving from one working area to a next working area, thereby saving energy and increasing traveling speed.

Alternatively, in the above embodiments, it is also determined whether a length of the traveling path is greater than a preset threshold before the autonomous mobile robot moves from the current location to a first working area or moves from the current working area to a next working area. When the length of the traveling path is greater than a preset length, the autonomous mobile robot turns off the working module and moves towards the working area according to the traveling path. When the length of the traveling path is less than or equal to the preset length, the autonomous mobile robot moves towards the working area while the working module is turned on.

As an example, sometimes the traveling path between two working areas is relatively short. For example, the length of the traveling path between a bedroom and a living room may be almost negligible. To avoid causing damages by frequently turning on/off the working module, it is not required to turn off the working module when the traveling path is shorter.

Alternatively, in the above embodiment, when determining the at least two working areas according to the second voice signal, the autonomous mobile robot first determines an area classification according to the second voice signal. Next, the autonomous mobile robot determines the at least two working areas from a set of areas corresponding to an environmental map according to the area classification.

In the embodiments of the present disclosure, the autonomous mobile robot may construct the environmental map when it is in a completely unknown environment, or the autonomous mobile robot may receive an environmental map sent by another robot. Next, area segmentation is performed on the environmental map to obtain a plurality of working areas, such that the environmental map can represent the working areas, such as kitchen, bathroom, bedroom, etc. Moreover, the environmental map can also represent actual locations of different objects in the environment, such that the autonomous mobile robot can determine placement statuses of objects within the working areas.

When the user wants to clean a certain category of working area, category information is added into the first voice command. For example, a voice signal is "Clean all bedrooms." After the voice signal is recognized, the autonomous mobile robot cleans each of the bedrooms.

For another example, when a voice signal is "Clean furniture in the living room," the area classification indicated by the voice signal is "living room." Thus, the autonomous mobile robot determines the living room from the environmental map. Further, the voice signal also indicates the target object "furniture." Thus, the autonomous mobile robot determines the furniture in the living room, such as sofas, and end tables, etc. For each piece of furniture, an area including the furniture is determined by centering on the furniture, and this area is cleaned.

For still another example, when a voice signal is "Clean bottoms of all the bedrooms," the area classification indicated by this voice signal is "bedroom." Thus, the autonomous mobile robot determines the bedroom from the environmental map. Further, this voice signal also indicates that the target object is "bed." Thus, the autonomous mobile robot continues to determine a location of a bed in each bedroom. For each bed, an area including the bed is determined by centering on that bed, and this area is cleaned.

For still another example, when a voice signal is "Start to clean sofa and dining table areas," the autonomous mobile robot travels to a location where the sofa is, draws a rectangle larger than the sofa by taking a center of the sofa as an origin, treats this rectangle as the working area and cleans it. Next, the autonomous mobile robot moves to an area where the dining table is, draws a rectangle larger than the dining table by taking a center of the dining table as an origin, treats this rectangle as the working area and cleans it.

For still another example, when a voice signal is "Start to clean sofa areas," the autonomous mobile robot travels to a location where the sofa is, draws a rectangle larger than the sofa by taking the center of the sofa as the origin, treats this rectangle as the working area and cleans it.

By adopting this solution, the user can control the autonomous mobile robot to execute tasks such as cleaning only for certain categories of working areas through voice control, which has higher intelligence. Further, the voice signal may also indicate the target object, such that the autonomous mobile robot executes tasks such as cleaning local areas, which further improves the intelligence of the autonomous mobile robot.

Alternatively, in the above embodiments, the autonomous mobile robot can divide the environmental map into a plurality of working areas according to the environmental map, location information of objects in the environmental map, or location information of gates in the environmental map, to obtain the set of areas. Next, the autonomous mobile robot updates an identifier of each working area in the set of areas, and sends update information to the voice recognition server such that the voice recognition server updates the identifier of each working area.

As an example, a shooting apparatus such as a camera is installed on the autonomous mobile robot. FIG. 15 is a schematic diagram of a furniture recognition process. Referring to FIG. 15, the autonomous mobile robot constructs the environmental map or continuously captures images during its movement to collect images. After the images are collected, the images are preprocessed, which includes one or more of contrast enhancement, lossless amplification, and feature extraction, etc. Next, the autonomous mobile robot utilizes a pre-deployed training model to perform AI recognition on the preprocessed images, such that the training model outputs recognition results such as types and location coordinates of furniture in the images, and maps the recognition results from a three-dimensional (3D) environmental map to a two-dimensional (2D) environmental map, saves and displays the recognition results. The training model is, for example, an AI model trained using various furniture as samples.

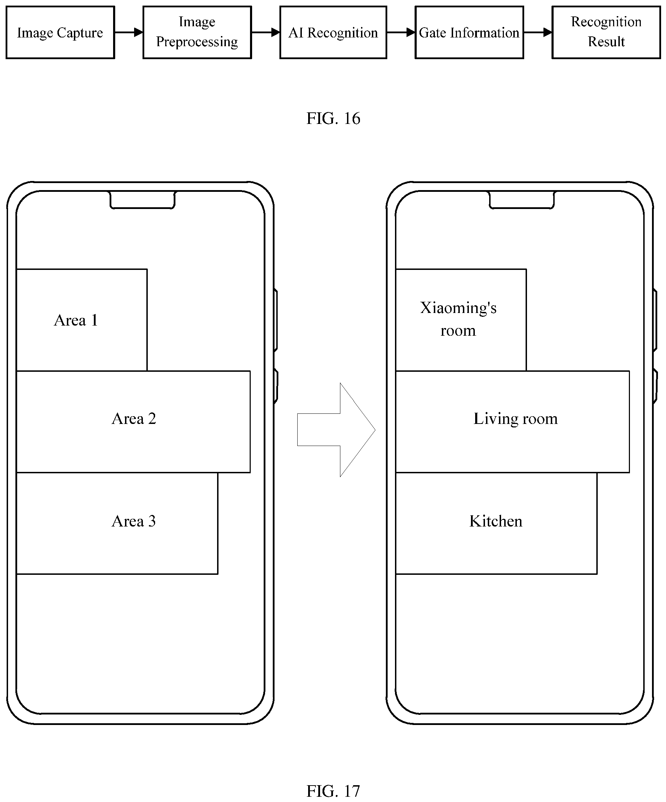

FIG. 16 is a schematic diagram of a gate recognition process. Different from FIG. 15, the training model is the AI model trained in advance using various gates as the samples. After the images are inputted into the training model, the recognition results such as the location coordinates of the gates are outputted, and the recognition results are mapped from the 3D environmental map to the 2D environmental map, and are saved and displayed.

After obtaining the 2D environmental map, the autonomous mobile robot fuses the recognition results of the furniture with the recognition results of the gates in the 2D environmental map, and partitions the 2D environmental map into a plurality of areas based on a partitioning algorithm. Next, the autonomous mobile robot sends partition results to an APP server and the voice recognition server, such that the APP server sends the partition results to the terminal device, where an APP for controlling the autonomous mobile robot is installed on the terminal device. After the terminal device receives the partition results, the partition results are displayed. As an example, reference is made to FIG. 17.

FIG. 17 is a schematic diagram of synchronization process between the autonomous mobile device and the voice recognition server. Referring to FIG. 17, after partitioning, the set of areas of the environmental map includes Area 1, Area 2, and Area 3. The user may make custom editing of an identifier of each area on the client. For example, the identifiers of the Area 1, the Area 2, and the Area 3 are changed as Xiaoming's room, living room, and kitchen sequentially. Next, the terminal device sends the updated information to the APP server, which sends the updated information to the autonomous mobile robot. After receiving the updated information, the autonomous mobile robot updates the identifier of each working area in the local environmental map.

In addition, after updating the identifier of each working area, the autonomous mobile robot also synchronously updates the identifier of the working area for the voice recognition server. After the autonomous mobile robot receives the updated information from the APP server, it is discovered that the identifier of the working area has been changed. Next, when updating local information, the autonomous mobile robot sends the updated information to the voice recognition server, such that the voice recognition server updates the identifier of each working area and saves it. Next, the user can interact with the autonomous mobile robot according to custom naming.

For example, when the user says "Clean Xiaoming's room," the autonomous mobile robot travels to a room area named "Xiaoming" and cleans this area.

For another example, when the user says "Clean the living room and the kitchen," the autonomous mobile robot first travels to an area named "living room" in order of the user's voice signals, cleans this area, and then travels to an area named "kitchen" and cleans this area.

By adopting this solution, the identifier of each working area saved on the voice recognition server is consistent with the identifier of the corresponding working area saved on the autonomous mobile robot, thereby improving accuracy in voice recognition of the voice recognition server.

In the above embodiment, when the second voice signal indicates the area classification, the autonomous mobile robot determines a working area according with the area classification from a pre-constructed set of areas according to the area classification. However, the embodiments of the present disclosure are not limited thereto. In other feasible implementation manners, when an area indicated by the area classification is a specific area and a location of the specific area may be different each time when a voice signal is issued, the autonomous mobile robot may also determine the working area in real time according to the area classification. For example, the specific area is a water-stained area at home. Apparently, water-stained areas at home vary at different times. In this case, the autonomous mobile robot captures images by means of a camera and recognizes the images, to determine at least two working areas according with the area classification.

For example, the second voice signal is "Check for water-stained areas at home and wipe dry." After the autonomous mobile robot collects the voice signal and performs semantic recognition, it continuously captures and recognizes images during the movement. Water-stained areas are wiped dry when such areas are found in the images. Next, the autonomous mobile robot keeps moving and captures images, and wipes dry each time when the water-stained area is recognized.

For another example, the second voice signal is "Mop oil-stained areas in the kitchen." After the autonomous mobile robot collects the voice signal and performs semantic recognition, it continuously captures images and recognizes them while traveling in the kitchen, and mops oil-stained areas each time when such areas are recognized.

By adopting this solution, the objective of executing tasks for the specific areas is achieved.

Alternatively, in the above embodiments, when the autonomous mobile robot sequentially executes the task indicated by the second voice signal for the at least two working areas, the autonomous mobile robot may determine an operation mode according to the area classification, and may sequentially execute the tasks for two working areas according to the operation mode.

As an example, when the user sends the second voice signal, no specific operation mode may be indicated, instead the autonomous mobile robot independently determines the operation mode and executes the tasks. For example, the user says "Clean the oil-stained areas in the kitchen." After the autonomous mobile robot continuously collects the images to determine the oil-stained areas, the autonomous mobile robot determines the operation mode as below: adding cleaning liquid and increasing frequency of mopping the floor. Next, the autonomous mobile robot sprays the cleaning solution in the oil-stained areas and mops the floor.

For example, the user says "Clean the water-stained areas in the living room." After the autonomous mobile robot continuously collects images to determine the water-stained areas, when there is a lot of water in the water-stained areas, the operation mode is determined as mopping the floor three times. Next, the autonomous mobile robot mops the floor three times in the water-stained areas. When there is relatively little water in the water-stained areas, the operation mode is determined as mopping the floor one time. Next, the autonomous mobile robot mops the floor one time in the water-stained areas.

By adopting this solution, the autonomous mobile robot automatically determines a more suitable operation mode, to achieve the objective of improving task execution efficiency.

Alternatively, in the above embodiments, it is assumed that the autonomous mobile robot is located in an initial area when the second voice signal is collected, where the initial area is not any one working areas in the second voice signal. So, before moving from the initial area to the working area, the autonomous mobile robot records task execution conditions of the initial area. Next, the autonomous mobile robot executes the tasks for each working area sequentially. After these tasks are executed, it is determined whether the tasks have been finished for the initial area according to records. When the autonomous mobile robot has not finished the tasks for the initial area, it returns to the initial area and executes the tasks.

By adopting this solution, after completing tasks for an area indicated by the second voice signal, the autonomous mobile robot returns to the initial area to continue executing the tasks, avoiding failure in completing the tasks for the initial area.

Alternatively, in the above embodiments, the second voice signal may also include task parameters, etc. For example, the second voice signal is: "Respectively clean Xiaoming's room and study for 10 minutes using a strong mopping mode," and "Mop the floor two times in the oil-stained areas," etc.

In the above embodiments, to prevent the autonomous mobile robot from continuously recognizing voice signals when the user has no interaction needs, the voice control function of the autonomous mobile robot is generally in a silent state. The voice control function of the autonomous mobile robot cannot be woken up unless after the user emits a specific wake-up message. When the voice control function is in the silent state, the autonomous mobile robot may be motionless or may be working.

During the working process of the autonomous mobile robot, noise produced by rotation of a motor is likely to interfere with accuracy of the autonomous mobile robot in recognition of the voice signals. The embodiments of the present disclosure can avoid such drawbacks. An operating state after waking up the autonomous mobile robot is referred to as a second operating state, and an operating state before waking up the autonomous mobile robot is referred to as a first operating state, where volume of sound produced by the autonomous mobile robot in the second operating state is smaller than volume of sound produced in the first operating state. After the autonomous mobile robot collects a second voice command in the first operating state, the autonomous mobile robot is automatically switched from the first operating state to the second operating state when the first voice signal matches the wake-up command of the autonomous mobile robot. That is, the autonomous mobile robot is switched to the second operating state by reducing output power consumption, and collects the second voice signal in the second operating state.

As an example, when installing a microphone on the autonomous mobile robot, the microphone is installed at a stable place with minimum noise. Moreover, the model is woken up by training with a large number of samples, such that a wake-up rate of the autonomous mobile robot in various operating states is improved. Next, when the voice control function of the autonomous mobile robot is woken up while in a running state, the autonomous mobile robot reduces the volume of the noise produced by itself by changing its own running state. Next, the user gives a control voice command through normal volume, and the autonomous mobile robot receives and executes a corresponding task.

For example, the autonomous mobile robot is a robot vacuum cleaner, and the autonomous mobile robot has a traveling speed of 0.2 meters per second when working in the first operating state. The user issues the first voice signal, and when the first voice signal matches the wake-up command, the autonomous mobile robot is switched to the second operating state, where the autonomous mobile robot has a traveling speed of 0.1 meters per second and produces lower noise. Next, the user issues the second voice signal, and the autonomous mobile robot collects the second voice signal and executes related tasks. The volume of the second voice signal may be lower than that of the first voice signal.

In addition, to ensure that the autonomous mobile robot can be woken up in high noise environments, the wake-up rate of the autonomous mobile robot in the running state may be improved through a lot of trainings and algorithms in advance. For example, when the autonomous mobile robot is within 5 meters of the user and is in the first operating state, the wake-up rate by normal human voice can reach 85%. After being woken up, the autonomous mobile robot is switched to the first operating state, and the voice recognition accuracy in the first operating state is almost equivalent to that of an intelligent loudspeaker.

By adopting this solution, after being woken up, the autonomous mobile robot automatically changes its running state to reduce the noise produced by itself and improves the subsequent voice recognition accuracy.

Alternatively, in the above embodiments, when the first voice signal matches the wake-up command of the autonomous mobile robot, the autonomous mobile robot determines a sound source location of the first voice signal. Next, the autonomous mobile robot is controlled to switch from a first posture to a second posture according to the sound source location, where a distance between a microphone and the sound source location when the autonomous mobile robot is in the second posture is less than a distance between the microphone and the sound source location when the autonomous mobile robot is in the first posture, and the microphone is a microphone arranged on the autonomous mobile robot.

As an example, intelligent voice technologies have been widely used in fields such as human-computer interaction, intelligent control, and online services. With the expansion of more application scenarios, the intelligent voice technologies have become the most convenient and effective means for people to obtain information and communicate. The intelligent voice technologies include a voice recognition technology and a voice synthesis technology. As a method for locating a sound source based on a microphone array, sound source localization can be classified into directional beamforming and time delay estimation. By combining the intelligent voice technologies and the microphone sound source localization technology with the autonomous mobile robot, a wide range of application scenarios can be designed, such as issuing a voice command to the autonomous mobile robot to execute tasks, making voice interaction with the autonomous mobile robot to obtain corresponding guidance, and controlling the autonomous mobile robot to change its direction according to the sound source.

In the field of the autonomous mobile robot, the microphone array is generally designed on the autonomous mobile robot to receive sound source information for sound source localization, and based on the localization, the autonomous mobile robot is controlled to turn towards a direction of sound source localization, to increase fun of interaction and the accuracy of next voice recognition. An disadvantage of this type of application is that the microphone array has a greater location error, which is generally around ± 45°. A fundamental reason for the error is that estimation accuracy of the time difference between the sound source and the microphone is not high enough. Due to presence of the error, final effects of the autonomous mobile robot turning to the sound source may not be good enough, resulting in poor usage experience.

For this reason, in the embodiments of the present disclosure, when the voice control function of the autonomous mobile robot is woken up, the autonomous mobile robot may adjust its posture such that the microphone on the autonomous mobile robot gets close to the user, thereby improving accuracy of voice acquisition. By means of the sound source localization technology, the voice recognition technology, and the AI recognition technology, the autonomous mobile robot can be precisely controlled to turn towards a sound speaker, i.e. the user. During this process, the autonomous mobile robot captures the sound source through the microphone array, and after signal conversion, the converted signal is recognized as a given wake-up message. Next, the autonomous mobile robot determines a location of the sound source relative to the microphone array, and then determines a location of the sound source relative to a body of the autonomous mobile robot, to determine an approximate rotation angle. In this way, an approximate location of the sound source is located. Finally, the autonomous mobile robot rotates according to the rotation angle, and during the process of rotation, AI recognition is combined to accurately determine a specific location of the sound source, thereby controlling the autonomous mobile robot to stop at a location facing the user.

A detailed description is made below on how the autonomous mobile robot turns towards the direction of sound source localization.

First, a first location is determined, where the first location is a location of the sound source relative to a center of the microphone array.

After the user emits a voice signal, the autonomous mobile robot picks up the voice signal through the microphone array, and processes the voice signal using a computing unit to obtain a voice recognition result. The first location is determined when the voice recognition result matches the wake-up message, otherwise the wake-up waiting state is maintained.

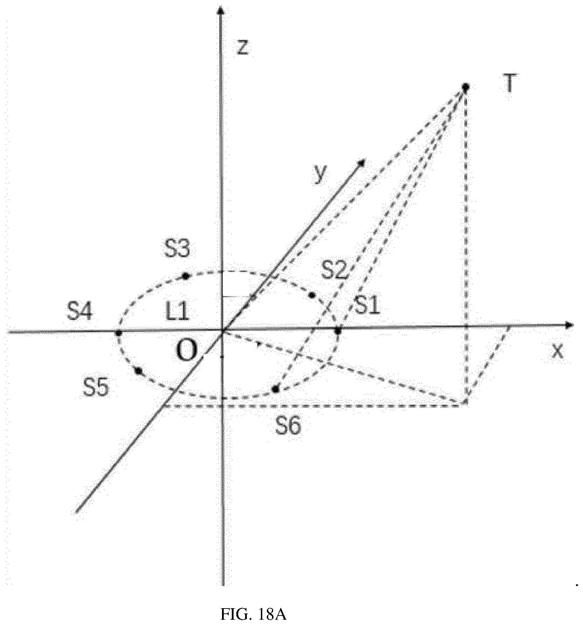

FIG. 18A is a schematic diagram of determining the location of the sound source relative to the center of the microphone array. Referring to FIG. 18A, the microphone array includes six microphones S 1 to S6, which are evenly distributed on a circle with a radius of L1, where an origin O of a spatial coordinate system is the center of the microphone array. After the sound source emits sound, durations of the sound reaching different microphones are different. Therefore, the autonomous mobile robot may determine the first location according to propagation speed of the sound, time delay, and the location of each microphone, etc. The time delay refers to a differential between the durations in receiving the sound by different microphones.

It is to be noted that although the six microphones are provided as an example here, the embodiments of the present disclosure are not limited thereto. In other feasible implementation manners, more or fewer microphones may be arranged.

Second, the second location is determined according to the first location, and then the rotation angle is determined according to the second location, where the second location is the location of the sound source relative to the center of the autonomous mobile robot.

Generally, the microphone array is located at a fixed location on the body of the autonomous mobile robot. After the first location is determined, the autonomous mobile robot can determine the second location according to the location of the microphone array and the first location.

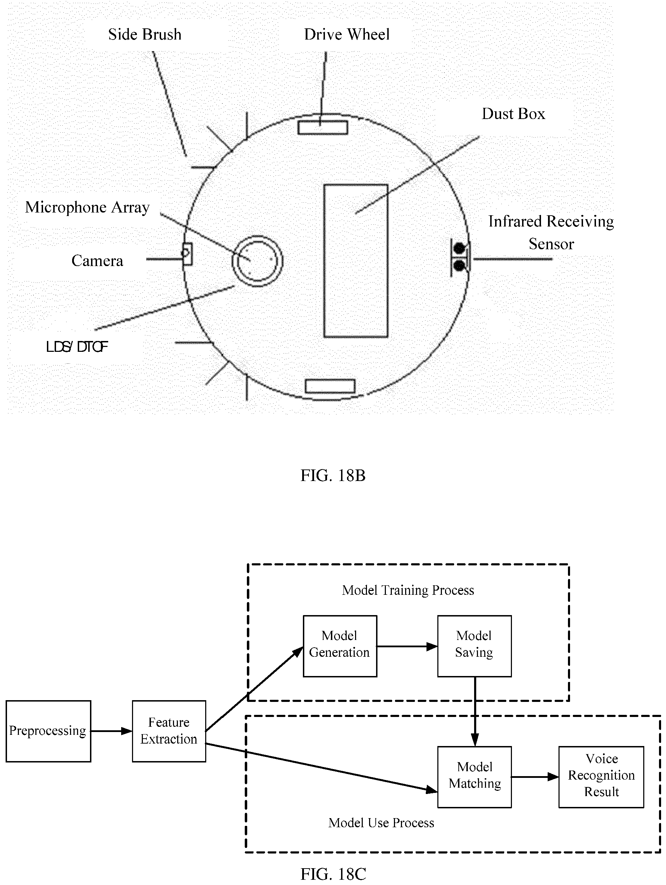

FIG. 18B is a schematic diagram of determining the microphone array and the body of the autonomous mobile robot. Referring to FIG. 18B, the center of the body of the autonomous mobile robot is a center of a larger circle, and the center of the body of the autonomous mobile robot does not coincide with that of the microphone array, but a relative location between both is known. Therefore, after the autonomous mobile robot determines the first location, the second location can be determined. After the second location is determined, the rotation angle can be determined, where the rotation angle refers to a rotation angle of the autonomous mobile robot during the process of changing from the first posture to the second posture.

The first posture is a posture of the autonomous mobile robot before it is woken up, the second posture is a posture where the microphone of the autonomous mobile robot faces towards the user, and the second posture may also be understood as a posture where the autonomous mobile robot directly faces towards the user. The posture where the autonomous mobile robot directly faces towards the user refers to a posture where the camera of the autonomous mobile device faces towards the user.

Finally, the autonomous mobile robot is rotated according to the rotation angle.

During the process of rotation, to avoid adverse impact of rapid rotation on AI recognition effects and adverse impact of slow rotation on usage experience, the rotation angle is classified by an electronic device into a first angle and a second angle. The autonomous mobile robot is rotated at the first speed within the first angle, and is rotated at the second speed within the second angle, where the first speed is greater than the second speed. The second angle is, for example, α degrees.

During the process of rotation, assuming the rotation angle is θ, the autonomous mobile robot is first rotated quickly by (θ-α) degrees, and then is rotated at a uniform speed by α degrees, α<θ. During the process of uniform rotation, images are continuously captured by means of the camera and AI recognition is performed. When the user is recognized, the rotation is stopped. When the user has not been recognized yet, the autonomous mobile robot is rotated by α degrees, and then the rotation is stopped. The angle α is related to a statistical error of the autonomous mobile robot, which may be 30 degrees, or 60 degrees, etc. However, a size of the angle α in the embodiments of the present disclosure is not limited thereto.

Taking an example where the autonomous mobile robot is the robot vacuum cleaner, referring to FIG. 18B again, functional components of the robot vacuum cleaner include a camera, a microphone array, a laser ranging sensor, an infrared receiving sensor, a side brush, and a drive wheel, etc. In addition, the robot vacuum cleaner also includes an edge sensor, an anti-drop sensor, a vacuum cleaner, a moving motor, a rolling brush, a computing storage unit, a battery module, and a WiFi module, etc. which are not shown in the figure. In the scenario of voice control, the robot vacuum cleaner is in any operating state, and the user issues a voice wake-up command to the robot vacuum cleaner, which pauses its current work and turns towards the issuer of the wake-up command, waiting for a next interactive command from the user.

For example, when the robot vacuum cleaner is cleaning the living room and the user issues a wake-up message "Xiao Q, Xiao Q," the robot vacuum cleaner pauses the cleaning work and turns towards the user. Meanwhile, the robot vacuum cleaner responds with voice broadcast by saying "I am here" and waits for further commands from the user, such as "Please leave from the living room and go to another room to clean," the robot vacuum cleaner responds with voice broadcast by saying "OK" and leaves from the living room and enters the bedroom or other rooms to continue cleaning.

In such voice interaction experience, it is required that the robot vacuum cleaner accurately recognizes the wake-up command from the user, and that at the same time the robot vacuum cleaner accurately and quickly turns towards the user, waiting for a next control command from the user. When the location of the voice command issuer cannot be accurately located, this interaction scenario will become very bad. In the first case, locating is not accurate, and the robot turns towards another direction and does not accurately face towards a voice controller. In the second case, the direction of the voice controller is located, but the rotation process is slow, the action lasts for a long time, and thus the interaction experience is poor.

For this reason, the robot vacuum cleaner pauses its cleaning work and, while turning towards the user, first determines the first location of the sound source relative to the center of the microphone array, and then determines the second location and the rotation angle according to the first location and the location of the microphone array relative to the body of the robot vacuum cleaner. Next, the robot vacuum cleaner is first rotated by (θ-α) degrees quickly, and then is rotated at a uniform speed by α degrees. During the process of uniform rotation, images are continuously captured by means of the camera and AI recognition is performed. When the user is recognized, the rotation is stopped. When the user has not been recognized yet, the robot vacuum cleaner is rotated by α degrees, and then the rotation is stopped.

For example, in FIG. 18B, when the user is on the right of the robot vacuum cleaner, the rotation angle θ is 180 degrees. When α is 60 degrees, the autonomous mobile robot first rotates rapidly clockwise by 120 degrees, and then rotates at a uniform speed and collects the images. The autonomous mobile robot stops rotating if it recognizes the user according to the images when rotating to 170 degrees. When the user is not recognized, the autonomous mobile robot rotates at a uniform speed by 60 degrees and then stops rotating.

By adopting this solution, the sound source localization is combined with the voice recognition and the AI recognition, such that a steering action of the autonomous mobile robot is more accurate. Moreover, during the process of rotation, the autonomous mobile robot first rotates quickly according to the rotation angle, and then rotates slowly at a uniform speed, the rotation action is smoother and the AI recognition is more accurate.

In the above embodiments, the voice recognition technology is a pattern recognition based on voice feature parameters. The voice recognition server can classify inputted voice according to a certain pattern, and then find the best matching result according to judgment criteria. A schematic frame diagram is shown in FIG. 18C.

FIG. 18C is a schematic diagram of processes of training a voice recognition model and recognizing voice. Referring to FIG. 18C, during the training process, an inputted voice signal is preprocessed and then is subjected to feature extraction. Model training is carried out by using extracted features to generate the voice recognition model, and the voice recognition model is saved.

The trained voice recognition model is deployed on the voice recognition server. The voice signal emitted by the user is preprocessed and then is subjected to feature extraction. The voice recognition server inputs the extracted features into the voice recognition model to improve voice recognition results.

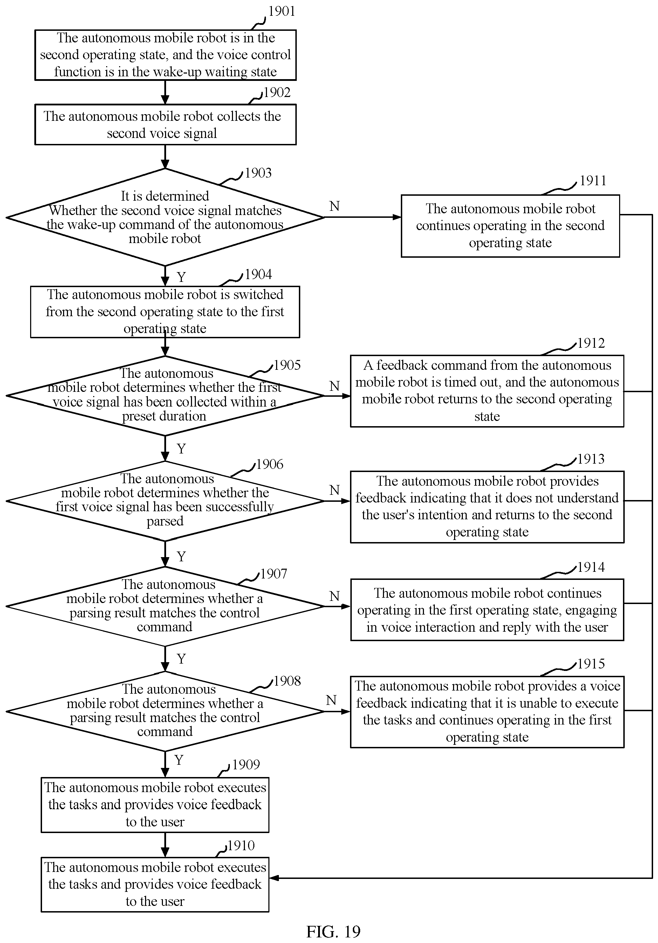

FIG. 19 is a flowchart of voice control logic of the autonomous mobile device provided in an embodiment of the present disclosure. This embodiment includes following steps.

In Step 1901, the autonomous mobile robot is in the first operating state, and the voice control function is in the wake-up waiting state.

In Step 1902, the autonomous mobile robot collects the first voice signal.

As an example, the user emits the first voice signal, and the autonomous mobile robot collects the first voice signal by means of the sound signal collection apparatus, etc.

In Step 1903, it is determined whether the first voice signal matches the wake-up command of the autonomous mobile robot. When the first voice signal matches the wake-up command, it indicates that the autonomous mobile robot is successfully woken up, and Step 1904 is executed. When the first voice signal does not match the wake-up command, it indicates that the autonomous mobile robot is not successfully woken up, and the autonomous mobile robot executes Step 1911.

In this step, the autonomous mobile robot determines whether the first voice signal matches the wake-up command by means of its own voice recognition function, or the autonomous mobile robot sends the first voice signal to the voice recognition server, such that the voice recognition server determines whether the first voice signal matches the wake-up command.

In Step 1904, the autonomous mobile robot is switched from the first operating state to the second operating state.

As an example, compared to the first operating state, the autonomous mobile robot has lower power consumption and lower noise in the second operating state. For example, in the first operating state, the drive wheel rolls normally and rest of sound producing components operate normally. In the second operating state, the drive wheel stops rolling, and the rest of sound producing components decrease their operating power. For another example, in the second operating state, the drive wheel slows down to roll, while the rest of sound producing components decrease their operating power.

In Step 1905, the autonomous mobile robot determines whether the second voice signal has been collected within a preset duration. Step 1906 is executed when the autonomous mobile robot successfully collects the second voice signal within the preset duration. Step 1912 is executed when the autonomous mobile robot fails in collecting the second voice signal within the preset duration.

In Step 1906, the autonomous mobile robot determines whether the second voice signal has been successfully parsed.

As an example, the autonomous mobile robot or the voice recognition server parses the second voice signal. Step 1907 is executed when the second voice signal is successfully parsed, otherwise Step 1913 is executed.

In Step 1907, the autonomous mobile robot determines whether a parsing result matches the control command. Step 1908 is executed when the parsing result matches the control command, otherwise Step 1914 is executed.

As an example, the autonomous mobile robot or the voice recognition server determines whether the parsing result is to execute tasks such as cleaning, sweeping, or mowing.

In Step 1908, the autonomous mobile robot determines whether its own state meets requirements for executing the tasks. Step 1909 is executed when its own state meets the requirements for executing the tasks, otherwise Step 1915 is executed.

As an example, the autonomous mobile robot determines whether its battery level, remaining space in a dust box, and remaining water volume in a water box meet task requirements.

In Step 1909, the autonomous mobile robot executes the tasks and provides voice feedback to the user, and then Step 1910 is executed.

For example, the autonomous mobile robot starts moving and says to the user, "OK, I am about to clean Xiaoming's room and study."

In Step 1910, this round of voice interaction is ended, and the voice control function gets into the wake-up waiting state.

In Step 1911, the autonomous mobile robot continues operating in the first operating state, and after the preset duration, Step 1910 is executed.

In Step 1912, a feedback command from the autonomous mobile robot is timed out and the autonomous mobile robot returns to the first operating state, and then Step 1910 is executed.

As an example, the autonomous mobile robot sends a voice feedback to the user: "Voice interaction timeout, please wake up again." Meanwhile, the autonomous mobile robot gets into the first operating state again. Next, Step 1910 is executed.

In Step 1913, the autonomous mobile robot provides feedback indicating that it does not understand the user's intention and returns to the first operating state. Next, Step 1910 is executed.

As an example, the autonomous mobile robot sends a voice feedback to the user: "Don't receive a correct command, please wake up again" or "I didn't hear what you said clearly, please wake up again." Meanwhile, the autonomous mobile robot gets into the first operating state again. Next, Step 1910 is executed.

In Step 1914, the autonomous mobile robot continues operating in the second operating state, engaging in voice interaction and reply with the user. After the preset duration, Step 1910 is executed.

As an example, the autonomous mobile robot sends a voice feedback to the user: "This task is too difficult for me to execute, please describe it in a different way" or "Do you want me to clean the floor under the bed in the bedroom?" to guide the user to interact with it to figure out the user's intentions.

In Step 1915, the autonomous mobile robot provides a voice feedback indicating that it is unable to execute the tasks and continues operating in the second operating state.

As an example, the autonomous mobile robot says to the user: "I need to charge to execute the task," "I need to return to a base station to replenish water," or "Please clean the dust box," etc. and continues operating in the second operating state. Next, after the preset duration, Step 1910 is executed.

Alternatively, the autonomous mobile robot says to the user: "I'm going to charge, I will clean the bedroom after the charging is completed," and then moves to the base station to charge itself to maintain its own state. Next, the autonomous mobile robot executes the tasks such as cleaning.

By adopting this solution, the autonomous mobile robot first determines its own state before executing the tasks, and determines whether to execute the tasks immediately or to charge or replenish water before executing the tasks according to its own state, which can avoid power interruption during the task execution process.

In the above embodiment, after the voice control function is woken up, the voice control function gets into the wake-up waiting state again after the preset time. For example, after the voice control function is woken up, the voice control function automatically gets into the wake-up waiting state again when no second voice signal is collected after the preset time. For another example, after a wake-up and command issuance cycle is completed, the voice control function automatically gets into the wake-up waiting state.

By adopting this solution, false triggering of the autonomous mobile robot by surrounding voice can be avoided.

Alternatively, in the above embodiments, the second voice signal may also indicate task forbidden areas. The autonomous mobile robot determines the task forbidden area from the environmental map, and determines at least two working areas from areas other than the task forbidden areas.

When there are fewer task forbidden areas or it is easier to describe the task forbidden areas compared to the working areas, the user may indicate the task forbidden areas in the second voice signal. The autonomous mobile robot determines the task forbidden areas according to the second voice signal, and then uses other areas as the working areas and executes the tasks. For example, when the user says: "Don't clean the bottom of the bed," the autonomous mobile robot cleans areas other than the bottom of the bed.

By adopting this solution, difficulty in issuing a voice command can be reduced for the user.

In the above embodiments, the voice signal is mainly used for controlling the working areas. However, the embodiments of the present disclosure are not limited thereto. In other feasible implementation manners, the autonomous mobile robot may also control other electronic devices in the home by means of voice control. For example, the autonomous mobile robot may perform fixed-point patrolling, monitoring or nursing by means of voice control, and the autonomous mobile robot may automatically search for objects by means of voice control. These scenarios are separately described below.

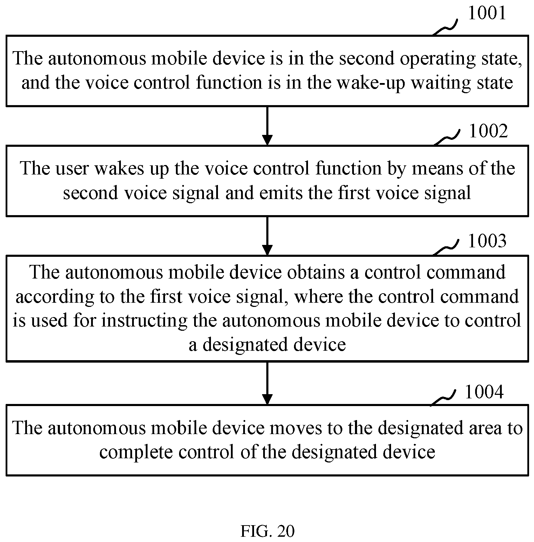

First, the autonomous mobile robot controls other electronic devices in the home by means of voice control. As an example, reference is made to FIG. 20. FIG. 20 is another flowchart of the autonomous mobile robot control method provided in an embodiment of the present disclosure. This embodiment includes following steps.

In Step 1001, the autonomous mobile robot is in the first operating state, and the voice control function is in the wake-up waiting state.

In Step 1002, the user wakes up the voice control function by means of the first voice signal and emits the second voice signal.

As an example, after the voice control function is woken up, the autonomous mobile robot is automatically switches to the second operating state. Reference is made to the above description for details, and thus detailed descriptions thereof are omitted here.

In Step 1003, the autonomous mobile robot obtains a control command according to the second voice signal, where the control command is used for instructing the autonomous mobile robot to control a designated device.

As an example, the autonomous mobile robot parses the second voice signal by itself, or the voice recognition server parses the second voice signal to obtain the control command. This control command is used for instructing the autonomous mobile device to control a designated device within a designated area. The designated device may be a household appliance such as an air conditioner, a refrigerator, and a curtain, etc.

In Step 1004, the autonomous mobile robot moves to the designated area to complete control of the designated device.

For example, when the autonomous mobile robot is in an on state, the user is within a voice signal collection range of the autonomous mobile robot. For example, the user and the autonomous mobile robot are both in the living room, and the autonomous mobile robot is five meters away from the user. The second voice signal emitted by the user is "Turn on the air conditioner in a master bedroom to cool at 25 °C." After the autonomous mobile robot plans a traveling path according to the environmental map and enters the master bedroom, the autonomous mobile robot uses its own hardware remote controller module to turn on the air conditioner in the master bedroom, and sets an air-conditioning mode to a cooling mode and a temperature at 25 °C.

By adopting this solution, value-added functions are achieved by means of voice control in combination with other hardware and algorithms of the autonomous mobile robot, making the autonomous mobile robot more intelligent.

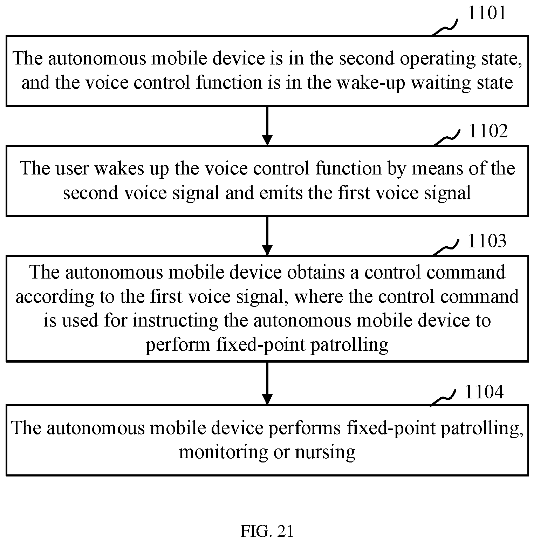

Second, the autonomous mobile robot achieves the fixed-point patrolling by means of voice control. As an example, reference is made to FIG. 21. FIG. 21 is still another flowchart of the autonomous mobile robot control method provided in an embodiment of the present disclosure. This embodiment includes following steps.

In Step 1101, the autonomous mobile robot is in the first operating state, and the voice control function is in the wake-up waiting state.

In Step 1102, the user wakes up the voice control function by means of the first voice signal and emits the second voice signal.

As an example, after the voice control function is woken up, the autonomous mobile robot is automatically switches to the second operating state. Reference is made to the above description for details, and thus detailed descriptions thereof are omitted here.

In Step 1103, the autonomous mobile robot obtains a control command according to the second voice signal, where the control command is used for instructing the autonomous mobile robot to perform fixed-point patrolling.

As an example, the autonomous mobile robot parses the second voice signal by itself, or the voice recognition server parses the second voice signal to obtain the control command. This control command is used for instructing the autonomous mobile robot to perform fixed-point patrolling, monitoring or nursing.

In Step 1104, the autonomous mobile robot performs fixed-point patrolling, monitoring or nursing.

For example, the second voice signal emitted by the user is "Go to father's room to patrol." After the autonomous mobile robot plans a traveling path according to the environmental map and enters the father's room, the autonomous mobile robot travels to a previously-set monitoring point, turns on the camera to take videos and sends the videos back to a client on the user's phone, thereby achieving the function of monitoring the elderly across the rooms.

By adopting this solution, the autonomous mobile robot can perform fixed-point patrolling in the home, monitor designated areas, and guard particular rooms according to the user's intentions by means of voice control.

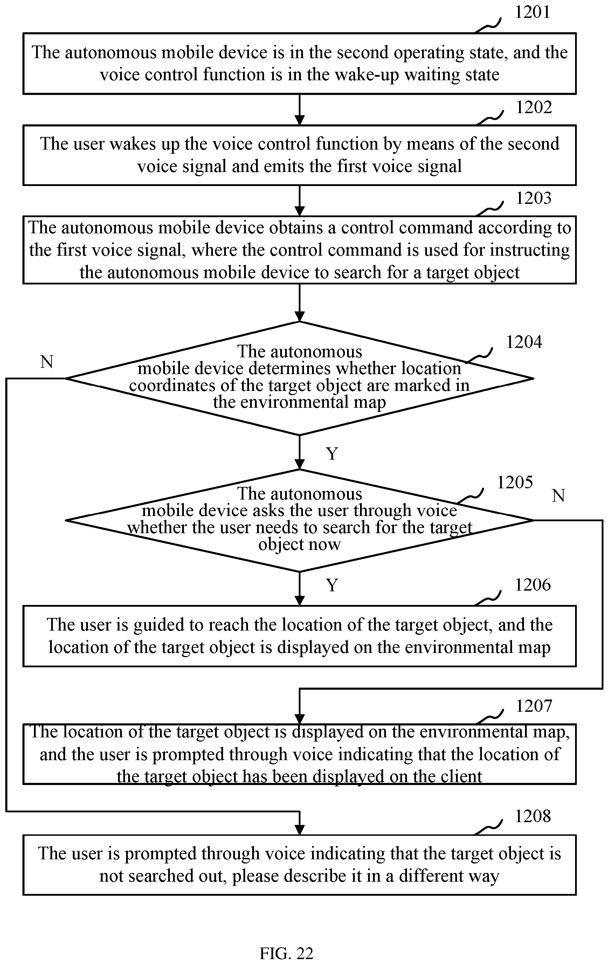

Finally, by means of voice control, the autonomous mobile robot is controlled to automatically search for objects. As an example, reference is made to FIG. 22. FIG. 22 is still another flowchart of the autonomous mobile robot control method provided in an embodiment of the present disclosure. This embodiment includes following steps.

In Step 1201, the autonomous mobile robot is in the first operating state, and the voice control function is in the wake-up waiting state.

In Step 1202, the user wakes up the voice control function by means of the first voice signal and emits the second voice signal.

In Step 1203, the autonomous mobile robot obtains a control command according to the second voice signal, where the control command is used for instructing the autonomous mobile robot to search for a target object.

In Step 1204, the autonomous mobile robot determines whether location coordinates of the target object are marked in the environmental map. Step 1205 is executed when the target object is marked in the environmental map, otherwise Step 1208 is executed.

As an example, during the operation of the autonomous mobile robot, the collected images are inputted into an AI training model to obtain the location coordinates, names, types, and so on of objects, and such information is recorded in the environmental map and is used for subsequent intelligent search for the objects. To prevent a client interface from being cluttered, the location coordinates of these objects may not be displayed on the environmental map. When the user gives a command to search for the target object, the client displays the location of the target object in the environmental map, etc.

In Step 1205, the autonomous mobile robot asks the user through voice whether the user needs to search for the target object now. Step 1206 is executed when the user needs to search for the target object now, otherwise Step 1207 is executed.

In Step 1206, the user is guided to reach the location of the target object, and the location of the target object is displayed on the environmental map.

In Step 1207, the location of the target object is displayed on the environmental map, and the user is prompted through voice indicating that the location of the target object has been displayed on the client.

It is searched for the location of the target object on the environmental map found in the running process.

In Step 1208, the user is prompted through voice indicating that the target object is not searched out; please describe it in a different way.

For example, the first voice signal is "Please help me find socks." After the autonomous mobile robot recognizes the first voice signal, it determines whether location coordinates of the socks have been marked locally. When the socks are not marked, the autonomous mobile robot prompts the user that the socks cannot be found. When the location coordinates of the socks are marked, the autonomous mobile robot issues an inquiry voice: "Do you want me to search for the socks now?" When the user gives a positive reply such as "YES" or "OK," the autonomous mobile robot moves and guides the user to the location of the socks and displays the location coordinates of the socks on the client interface of the environmental map. When the user gives a negative reply such as "NO," the autonomous mobile robot only needs to instruct the client to display the location coordinates of the socks.

By adopting this solution, the AI training model is trained by means of machine learning, and specific objects are recognized by means of the AI training model, such that the user can control the autonomous mobile robot through voice to search for some specific objects and mark them on the map or guide the user to scenes where the objects are. In this way, an objective of intelligent search for objects is achieved, use of the autonomous mobile robot is expanded, and intelligence of the autonomous mobile robot is improved.

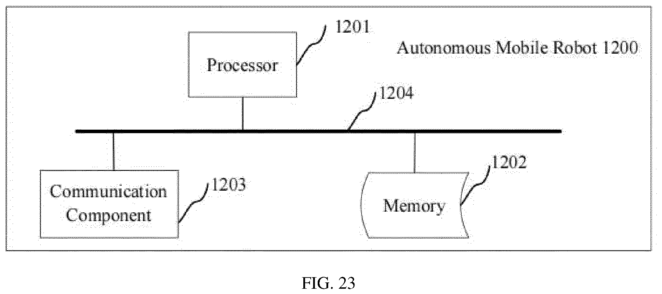

FIG. 23 is a schematic structural diagram of an autonomous mobile robot provided in an embodiment of the present disclosure. As shown in FIG. 23, the autonomous mobile robot 1200 includes:
a processor 1201 and a memory 1202.

The memory 1202 stores computer instructions.

The processor 1201 executes the computer instructions stored in the memory 1202, causing the processor 1201 to execute the above method implemented by the autonomous mobile robot.

Reference may be made to the above method embodiments for specific implementation processes of the processor 1201, and implementation principles and technical effects thereof are similar, and thus detailed descriptions thereof are omitted herein.

Alternatively, the autonomous mobile robot 1200 also includes a communication component 1203. The processor 1201, the memory 1202 and the communication component 1203 may be connected through a bus 1204.

The embodiments of the present disclosure also provide a computer-readable storage medium storing computer instructions, which are configured for performing the above method implemented by the autonomous mobile robot when executed by the processor.

The embodiments of the present disclosure also provide a computer program product, which includes a computer program. When the computer program is executed by the processor, the method implemented by the autonomous mobile robot is performed.

Other embodiments of the present disclosure will be apparent to those skilled in the art from consideration of the specification and practice of the invention disclosed here. The present disclosure is intended to cover any variations, uses, or adaptations of the present disclosure following the general principles thereof and including such departures from the present disclosure as come within known or customary practice in the art. It is intended that the specification and embodiments be considered as exemplary only, with a true scope and spirit of the present disclosure being indicated by the following claims.

It is to be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. An autonomous mobile robot control method, comprising:
determining a sound source direction according to a voice signal from a user;
determining moving objects around the autonomous mobile robot;
determining, from the moving objects, a target object located in the sound source direction;
determining a working area according to the target object; and
moving to the working area, and executing a task within the working area.

2. The method according to claim 1, wherein the determining moving objects around the autonomous mobile robot comprises:
obtaining a plurality of simultaneous localization and mapping (SLAM) maps and a plurality of direct time-of-flight (DTOF) scatter plots, SLAM maps among the plurality of SLAM maps corresponding one-to-one with DTOF scatter plots among the plurality of DTOF scatter plots;
for each of the plurality of DTOF scatter plots, filtering out, from the DTOF scatter plot according to the corresponding SLAM map, pixels representing static objects to obtain a set of dynamic points; and
determining the moving objects around the autonomous mobile robot according to the set of dynamic points of adjacent two of the plurality of DTOF scatter plots.

3. The method according to claim 2, wherein the determining the moving objects around the autonomous mobile robot according to the set of dynamic points of adjacent two of the plurality of DTOF scatter plots comprises:
determining a first subset from a first set of dynamic points of a first DTOF scatter plot;
determining whether there is a second subset in a second set of dynamic points of a second DTOF scatter plot, wherein a distance between a first location indicated by the first subset and a second location indicated by the second subset is greater than a preset distance, and a differential between number of the pixels in the first subset and number of the pixels in the second subset is less than a preset differential, and the first DTOF scatter plot and the second DTOF scatter plot are any two adjacent DTOF scatter plots among the plurality of DTOF scatter plots; and
when the second subset exists in the second set of dynamic points, determining that the first subset and the second subset represent a same object and the object is a moving object.

4. The method according to any one of claims 1 to 3, wherein the determining, from the moving objects, a target object located in the sound source direction comprises:
determining, from the moving objects, a moving object that makes a motion on a foot and is located in the sound source direction to obtain the target object.

5. The method according to any one of claims 1 to 3, wherein the determining a working area according to the target object comprises:
moving to a location having the preset distance from the target object, and determining the working area according to an initial location of the target object when the target object does not undergo displacement.

6. The method according to any one of claims 1 to 3, wherein the determining a working area according to the target object comprises:
after moving to the location having the preset distance from the target object, controlling the autonomous mobile robot to follow the target object to move when the target object undergoes displacement; and
when the target object stops moving, determining the working area according to a location where the target object stops moving.

7. The method according to claim 6, wherein the controlling the autonomous mobile robot to follow the target object to move comprises:
determining whether the target object appears in both adjacent two DTOF scatter plots;
when the target object appears in both the adjacent two DTOF scatter plots, determining a distance between the target objects in the adjacent two DTOF scatter plots; and
adjusting a speed according to the distance to follow the target object to move.

8. The method according to claim 6, wherein the controlling the autonomous mobile robot to follow the target object to move comprises:
capturing a skeleton diagram of the target object by means of an artificial intelligence (AI) camera;
when the skeleton diagram is complete, maintaining a follow state to follow the target object to move; and
when the skeleton diagram is incomplete, avoiding or surmounting an obstacle between the autonomous mobile device and the target object until the autonomous mobile robot maintains the follow state to follow the target object to move after the AI camera captures the complete skeleton diagram.

9. The method according to any one of claims 1 to 3, wherein before determining a sound source direction according to a voice signal from a user, the method further comprises:
waking up the autonomous mobile robot; and
determining a control instruction corresponding to the voice signal to control the autonomous mobile robot to determine the working area in real time according to the target obj ect.

10. The method according to any one of claims 1 to 3, further comprising:
determining whether the target object is missing;
when the target object is missing, determining a search range according to coordinates of a location where the target object is last seen;
searching for the target object within the search range; and
getting into a summon waiting state when the target object is not searched out.

11. The method according to claim 1, further comprising:
collecting a first voice signal;
waking up a voice control function of the autonomous mobile robot when the first voice signal matches a wake-up command of the autonomous mobile robot;
collecting a second voice signal in a wake-up state of the voice control function;
determining at least two working areas according to the second voice signal; and
executing a task indicated by the second voice signal for the at least two working areas sequentially.

12. The method according to claim 11, wherein the executing a task indicated by the second voice signal for the at least two working areas sequentially comprises:
determining a sequential order when each of the at least two working areas appears in the second voice signal; and
executing the task indicated by the second voice signal for the at least two working areas sequentially according to the sequential order.

13. The method according to claim 11, wherein the executing a task indicated by the second voice signal for the at least two working areas sequentially comprises:
determining a distance between the autonomous mobile robot and each of the at least two working areas;
sorting the at least two working areas in order of distance from nearest to farthest to obtain a queue; and
executing the task indicated by the second voice signal for the at least two working areas sequentially according to the queue.

14. The method according to any one of claims 11 to 13, wherein the executing a task indicated by the second voice signal for the at least two working areas sequentially comprises:
after completing the task for one of the at least two working areas, stop executing the task before moving to a next working area.

15. The method according to any one of claims 11 to 13, wherein the determining at least two working areas according to the second voice signal comprises:
determining an area classification according to the second voice signal; and
determining the at least two working areas from a set of areas corresponding to an environmental map according to the area classification.

16. The method according to claim 15, wherein the determining the at least two working areas from an environmental map according to the area classification comprises:
when the area classification indicates a target object, determining, from the environmental map by centering on the target object, an area including the target object to obtain the at least two working areas.

17. The method according to claim 15, wherein before the determining at least two working areas according to the second voice signal, the method further comprises:
dividing the environmental map into a plurality of working areas according to the environmental map, location information of an object in the environmental map, or location information of a gate in the environmental map, to obtain the set of areas;
updating an identifier of each working area in the set of areas; and
sending update information to a voice recognition server such that the voice recognition server updates the identifier of each working area.

18. The method according to any one of claims 11-13, wherein the collecting a second voice signal in a wake-up state of the voice control function comprises:
controlling the autonomous mobile robot to switch from a first operating state to a second operating state when the first voice signal matches the wake-up command of the autonomous mobile robot, wherein volume of sound produced by the autonomous mobile robot in the second operating state is smaller than volume of sound produced in the first operating state, and the wake-up command is configured for waking up the voice control function of the autonomous mobile robot; and
collecting the second voice signal in the second operating state.

19. The method according to claim 18, further comprising:
when the first voice signal matches the wake-up command of the autonomous mobile robot, determining a sound source location of the first voice signal; and
controlling the autonomous mobile robot to switch from a first posture to a second posture according to the sound source location, wherein a distance between a microphone and the sound source location when the autonomous mobile robot is in the second posture is less than a distance between the microphone and the sound source location when the autonomous mobile robot is in the first posture, and the microphone is a microphone arranged on the autonomous mobile robot.

20. The method according to claim 19, wherein the controlling the autonomous mobile robot to switch from a first posture to a second posture according to the sound source location comprises:
determining a rotation angle according to the sound source location, the rotation angle being configured for indicating an angle that the autonomous mobile robot needs to rotate when switching from the first posture to the second posture;
classifying the rotation angle into a first angle and a second angle; and
rotating at a first speed within the first angle, and rotating at a second speed within the second angle, the first speed being greater than the second speed.

21. The method according to claim 19, wherein after the controlling the autonomous mobile robot to switch from a first operating state to a second operating state according to the sound source location when the first voice signal matches the wake-up command of the autonomous mobile robot, the method further comprises:
controlling the voice control function to get into a wake-up waiting state after a preset duration.

22. The method according to any one of claims 11 to 13, wherein before the executing a task indicated by the second voice signal for the at least two working areas sequentially, the method further comprises:
determining whether the autonomous mobile robot's own state meets a requirement for executing a task; and
maintaining the autonomous mobile robot when the own state does not meet the requirement for executing the task.

23. The method according to any one of claims 11 to 13, wherein the determining at least two working areas according to the second voice signal comprises:
when the second voice signal indicates a task forbidden area, determining the task forbidden area from the environmental map, and determining the at least two working areas from an area other than the task forbidden area.

24. The method according to any one of claims 11 to 13, wherein the determining at least two working areas according to the second voice signal comprises:
determining an area classification according to the second voice signal; and
collecting an image; and
determining, from the image, an area corresponding to the area classification to obtain the at least two working areas.

25. The method according to claim 24, wherein the executing a task indicated by the second voice signal for the at least two working areas sequentially comprises:
determining an operation mode according to the area classification; and
executing the task for the at least two working areas sequentially according to the operation mode.

26. The method according to any one of claims 11 to 13, wherein after the executing a task indicated by the second voice signal for the at least two working areas sequentially, the method further comprises:
determining whether the task has been executed for an initial area, the initial area being an area where the autonomous mobile robot collects the second voice signal; and
returning to the initial area to execute the task when the task has not been executed for the initial area.

27. An autonomous mobile robot control apparatus, comprising:
a first determining module configured to determine a sound source direction according to a voice signal from a user;
a second determining module configured to determine moving objects around the autonomous mobile robot;
a third determining module configured to determine, from the moving objects, a target object located in the sound source direction;
a processing module configured to determine a working area according to the target object; and
an execution module configured to move to the working area and execute a task within the working area.

28. An autonomous mobile robot comprising a processor, a memory, and a computer program stored on the memory and capable of running on the processor, wherein when the processor executes the computer program, the autonomous mobile robot is caused to perform the method as claimed in any one of claims 1 to 26.

29. A computer-readable storage medium, storing a computer program, wherein when the computer program is executed by a processor, the method as claimed in any one of claims 1 to 26 is implemented.
